# EUROPÄISCHE PATENTSCHRIFT

(11) **EP 4 470 727 B1**
(45) Veröffentlichungstag und Bekanntmachung des Hinweises auf die Patenterteilung: **30.07.2025**
(21) Anmeldenummer: 23176264.2
(22) Anmeldetag: 31.05.2023
(51) Int. Cl.: B25J 9/16, B25J 19/06, B25J 19/02

(54) **VERFAHREN ZUM SICHEREN BETRIEB EINER MASCHINE**
METHOD FOR SAFELY OPERATING A MACHINE
PROCÉDÉ DE FONCTIONNEMENT SÉCURISÉ D'UNE MACHINE

(43) Veröffentlichungstag der Anmeldung: 04.12.2024
(73) Patentinhaber: SICK AG, 79183 Waldkirch (DE)
(72) Erfinder: HANSEN, Christoph, 22393 Hamburg (DE); BÜHLER, Andre, 79348 Freiamt (DE); NEUMANN, Thomas, 79227 Schallstadt (DE); WINTER, Jonas, 23896 Nusse (DE)
(74) Vertreter: Manitz Finsterwald Patent- und Rechtsanwaltspartnerschaft mbB

(56) Entgegenhaltungen:
- EP-A1- 3 988 256
- EP-A1- 4 124 789
- US-A1- 2019 270 199

## Beschreibung

Die Erfindung betrifft ein Verfahren zum sicheren Betrieb einer Maschine, insbesondere im Rahmen einer Mensch-Roboter-Kollaboration, wobei die Maschine einen beweglichen Maschinenteil mit einem Gefährdungsabschnitt aufweist, d. h. mit einem Abschnitt, von dem bzw. von dessen Struktur grundsätzlich eine besondere Gefährdung für einen mit der Maschine zusammenarbeitenden Menschen ausgehen kann. Ein Verfahren nach dem Oberbegriff des Anspruchs 1 ist beispielsweise aus EP 3 988 256 A1 bekannt.

Vor allem im industriellen Umfeld werden Roboter oder vergleichbare Maschinen dazu verwendet, bestimmte Aufgaben zu verrichten. Dies betrifft insbesondere Aufgaben, bei denen besonders große Kräfte ausgeübt werden müssen und/oder die mit hoher Geschwindigkeit und Präzision auszuführen sind, vor allem dann, wenn die jeweilige Aufgabe sehr oft auf dieselbe Weise durchzuführen ist. Es gibt aber auch Aufgaben, die sich von einem Menschen besser ausführen lassen als von einer Maschine. Dies betrifft insbesondere Aufgaben, die schwer zu automatisieren sind, etwa weil sie Erfahrung und/oder eine hohe Anpassungsfähigkeit voraussetzen. Bei Prozessen, die sowohl Arbeiten der einen Art als auch Arbeiten der anderen Art umfassen, kann es daher zweckmäßig sein, wenn Menschen und Maschinen zusammenarbeiten, um die jeweiligen Stärken möglichst effizient zu kombinieren.

Die Art der Zusammenarbeit kann dabei unterschiedlich ausfallen. Beispielsweise können sich die Arbeitsbereiche eines Roboters und eines Menschen lediglich überschneiden, wobei keine direkte Interaktion zwischen dem Roboter und dem Menschen stattfindet oder wobei eine Interaktion nur bei Stillstand des Roboters vorgesehen ist. Eine solche Form der Zusammenarbeit wird auch als Mensch-Roboter-Kooperation bezeichnet. Die Zusammenarbeit kann aber auch so weit gehen, dass eine direkte Interaktion bis hin zum planmäßigen Kontakt zwischen einem Menschen und einem Roboter erfolgt, etwa wenn der Mensch und der Roboter gleichzeitig an einem Werkstück arbeiten oder der Roboter handgeführt wird. Diese Art der Zusammenarbeit wird auch als Mensch-Roboter-Kollaboration bezeichnet. In Bezug auf die vorliegende Erfindung soll Mensch-Roboter-Kollaboration in einem eher weiten Sinne zu verstehen sein und alle der genannten Formen der Zusammenarbeit, also auch Mensch-Roboter-Kooperationen, umfassen.

Durch eine Mensch-Roboter-Kollaboration ergeben sich hohe Anforderungen hinsichtlich der Sicherheit der beteiligten Personen, da die beteiligten Maschinen insbesondere aufgrund ihrer Kraft und Geschwindigkeit eine Gefahr für die Personen darstellen können. Es müssen daher Vorkehrungen getroffen werden, um Schaden an Personen nach Möglichkeit auszuschließen. Derartige Vorkehrungen umfassen sowohl passive Maßnahmen, beispielsweise dass harte oder scharfe Kanten an Außenseiten der Maschine vermieden und eher weiche und/oder abgerundete Oberflächen vorgesehen werden, als auch aktive Sicherheitsmechanismen, die im Falle einer Gefahr für eine Person eine konkrete sicherheitsgerichtete Reaktion auslösen, um diese Gefahr abzuwenden. Beispielsweise kann an einem freien Ende eines Roboterarms ein Werkzeug (zum Beispiel ein Greifer oder ein Dispenser) vorgesehen sein, das der Bearbeitung eines Werkstücks dient, wobei die Werkzeugspitze zur Erfüllung ihrer Funktion in einer Weise ausgebildet sein muss, die für eine mit der Maschine zusammenarbeitende Person gefährlich sein kann, etwa weil sie sich an dem Werkzeug verletzen kann. Um in einem solchen Fall dennoch eine Gefährdung möglichst auszuschließen, kann es etwa zweckmäßig sein, sicherzustellen, dass das Werkzeug stets nur mit einem gewissen Sicherheitsabstand zu anwesenden Personen betrieben werden kann.

Wenn im Rahmen einer Mensch-Roboter-Kollaboration Roboter oder vergleichbare Maschinen, wie etwa AGVs (Automated Guided Vehicle), AGCs (Automated Guided Container) oder Drohnen, in einer definierten Arbeitsumgebung mit Personen zusammenarbeiten, ohne dabei durch eine Trennvorrichtung dauerhaft räumlich voneinander getrennt zu sein, kann sich eine Gefahr für eine an der Kollaboration beteiligte Person insbesondere dadurch ergeben, dass es zu einer Kollision zwischen der Maschine und der Person kommt. Dieser Gefahr kann auf verschiedene Weisen begegnet werden.

Eine Möglichkeit besteht darin, dass die Maschine nur unter direkter Kontrolle eines Menschen betrieben wird, der somit selbst sicherstellen kann, dass weder er noch andere Personen durch die Maschine gefährdet werden. Erfolgt die Ansteuerung der Maschine hingegen automatisch oder arbeitet die Maschine sogar autonom, kann die Sicherheit der mit der Maschine zusammenarbeitenden Personen gemäß einem weiteren Sicherungskonzept dadurch gewährleistet werden, dass die Bewegungen der Maschine, insbesondere ihre Kraft und Geschwindigkeit, so limitiert werden, dass im Falle einer Kollision diese mit hoher Wahrscheinlichkeit für die jeweilige Person weder schmerzhaft ist noch zu Verletzungen führt. Ein solches auf einer Limitierung der Maschine beruhendes Sicherheitskonzept ist jedoch nur möglich, wenn die Arbeit, für die die Maschine eingesetzt wird, keine hohen Kräfte oder Geschwindigkeiten erfordert. Zudem kann es Abschnitte der Maschine geben, von denen auch bei geringen Kräften und Geschwindigkeiten eine Gefährdung ausgeht, etwa weil sie spitz, scharf oder heiß sind.

Gemäß einem alternativen Sicherungskonzept wird darauf abgezielt, dass es erst gar nicht zu einer Kollision zwischen einer Person und der Maschine kommt. Dazu wird sichergestellt, dass die Maschine überhaupt nur dann in Betrieb gesetzt werden kann, wenn sich kein Mensch in einer definierten Umgebung der Maschine oder zumindest eines jeweiligen Gefährdungsabschnitts der Maschine befindet, und unverzüglich abgebremst oder angehalten wird, sobald ein Mensch in die definierte Umgebung eindringt. Die Umgebung kann insbesondere durch einen Sicherheitsabstand zu der Maschine oder zu einem Werkzeug der Maschine definiert sein und kann dabei statisch oder, wenn die Umgebung relativ zu einem sich bewegenden Element der Maschine definiert ist, auch dynamisch sein. Die Umgebung wird dabei laufend überwacht, so dass auf die Anwesenheit eines Menschen in der Umgebung unverzüglich mit einer geeigneten Sicherungsmaßnahme reagiert werden kann.

Die für solche Sicherungskonzepte eingesetzte Technik muss besonders zuverlässig arbeiten und daher hohe Sicherheitsanforderungen erfüllen. Beispielsweise kann es erforderlich sein, dass verwendete Sensoren die Normen EN ISO 13849-1:2015 und EN ISO 13849-2:2012 für Maschinensicherheit und die Gerätenormen EN IEC 61496-1: 2020 und EN IEC 61496-2:2020 für berührungslos wirkende Schutzeinrichtungen (BWS) erfüllen. Dazu sind eine Reihe von Maßnahmen zu treffen, wie etwa eine sichere elektronische Auswertung durch redundante, diversitäre Elektronik und eine Funktionsüberwachung oder Überwachung der Verschmutzung optischer Bauteile.

Beispielsweise kann an dem distalen Ende eines Roboterarms, an dem ein Werkzeug oder eine Werkzeugaufnahme für ein Werkzeug vorgesehen sein kann, von dem grundsätzlich eine Gefährdung für eine mit dem Roboterarm zusammenarbeitende Person ausgehen kann, eine Sicherheitseinrichtung vorgesehen werden, welche die von diesem Gefährdungsabschnitt des Roboterarms ausgehende Gefahr dadurch absichert, dass ein den Gefährdungsabschnitt umhüllendes Schutzvolumen überwacht wird. Das Schutzvolumen kann mittels mehrerer Sensoren realisiert werden, mit denen sich feststellen lässt, ob das Schutzvolumen frei ist oder nicht. Wenn ein Eingreifen in das Schutzvolumen detektiert wird, kann darauf in sicherheitsgerichteter Weise reagiert werden, insbesondere indem die Bewegung des Roboterarms abgebremst oder gestoppt wird.

Für eine zuverlässige Erkennung eines Ereignisses, auf das in sicherheitsgerichteter Weise reagiert werden muss, ist es wichtig, in welcher Weise das Schutzvolumen definiert ist bzw. in welcher Weise definiert ist, was als ein Eingreifen in das Schutzvolumen gewertet wird. Typischerweise werden dazu vor dem eigentlichen Betrieb der Maschine Referenzdaten eingelernt, basierend auf welchen das Schutzvolumen dann vorab definiert wird. Besonders berücksichtigt werden müssen dabei Abschnitte des Arbeitsablaufs der Maschine, in denen eine Annäherung eines überwachten Gefährdungsabschnitts der Maschine an ein oder mehrere Objekte planmäßig vorgesehen ist, damit diese Annäherung nicht zu einer sicherheitsgerichteten Reaktion infolge eines Eingreifens dieser Objekte in das Schutzvolumen führt.

Das Einlernen der Referenzdaten erfolgt typischerweise im Zuge der Konfiguration eines Ablaufprogramms für die jeweilige Maschine. Beispielsweise kann eine solche Konfiguration anhand von Templates erfolgen, die verschiedene Arbeitsschritte der Maschine (z. B. Bewegen, Drehen, Suchen, Greifen etc.) repräsentieren und als Funktionsblöcke parametrisiert und miteinander zu einer Abfolge verknüpft werden können, um ein Ablaufprogramm für die Maschine zu erstellen. Grundsätzlich kann ein Schutzvolumen für einen jeweiligen Gefährdungsabschnitt der Maschine unabhängig von dem Ablaufprogramm definiert sein und überwacht werden. Wenn allerdings das Ablaufprogramm Abschnitte enthält, deren Ausführung eine sicherheitsgerichtete Reaktion auslösen würde, muss das Schutzvolumen an das jeweilige Ablaufprogramm angepasst werden.

Für eine solche Anpassung könnte etwa ein spezielles dediziertes Template bereitgestellt werden, das in das Ablaufprogramm integriert werden kann, um einen abgesicherten Wegpunkt bereitzustellen, der sicherstellt, dass die für die Anpassung benötigten Referenzdaten entlang einer definierten Anfahrtsbewegung zusammen mit den Koordinaten des Wegpunkts eingelernt werden. Auf diese Weise kann vor dem eigentlichen Normalbetrieb der Maschine, in der diese die Aufgaben gemäß dem Ablaufprogramm ausführt, eine Art Kalibrierung zum Einlernen der Referenzdaten durchgeführt werden, die für das Anpassen des Schutzvolumens benötigt werden.

Das erfordert jedoch eine spezifische Implementierung des genannten dedizierten Templates innerhalb des Ecosystems des jeweiligen Roboters bzw. der jeweiligen Maschine. Zudem ist für die Verwendung des speziellen Templates in der Regel eine gesonderte Schulung des mit der Konfiguration befassten Nutzers erforderlich. Insgesamt ist ein solches Einlernen eines an das jeweilige Ablaufprogramm angepassten Schutzvolumens somit recht aufwendig. Darüber hinaus sind die Bewegungsabläufe, die auf diese Weise eingelernt werden können, darauf beschränkt, was sich mittels des speziellen Templates (oder mittels einer grundsätzlich restriktiven Palette an Templates) erstellen lässt.

Es ist eine Aufgabe der Erfindung, ein Verfahren zum sicheren Betrieb einer Maschine bereitzustellen, die einen beweglichen Maschinenteil mit einem Gefährdungsabschnitt aufweist, sowie eine derartige Maschine bereitzustellen, die gemäß dem Verfahren betrieben werden kann, wobei das Verfahren eine besonders einfache Bedienbarkeit insbesondere hinsichtlich eines erstmaligen Einlernens, vorzugsweise auch hinsichtlich eines wiederholten Anpassens, eines Schutzvolumens innerhalb einer überwachten Umgebung des Gefährdungsabschnitts bietet und dabei gleichwohl ein besonders flexibles Erstellen nutzer- und applikationsspezifischer Bewegungsabläufe ermöglicht.

Die Aufgabe wird gelöst durch ein Verfahren mit den Merkmalen des Anspruchs 1 sowie durch eine Maschine mit den Merkmalen des Anspruchs 13. Vorteilhafte Ausführungsformen der Erfindung ergeben sich aus den abhängigen Ansprüchen, der vorliegenden Beschreibung sowie den Figuren.

Das erfindungsgemäße Verfahren dient dem sicheren Betrieb einer Maschine, die einen beweglichen Maschinenteil mit einem Gefährdungsabschnitt aufweist, insbesondere einem sicheren Betrieb im Rahmen einer Mensch-Roboter-Kollaboration. Bei dem beweglichen Maschinenteil kann es sich beispielsweise um einen Roboterarm handeln. Bei dem Gefährdungsabschnitt kann sich grundsätzlich um einen beliebigen Abschnitt des beweglichen Maschinenteils handeln, für den sichergestellt werden soll, dass eine mit der Maschine zusammenarbeitende Person vor ihm geschützt ist. Insofern kommt insbesondere ein solcher Abschnitt als Gefährdungsabschnitt in Betracht, von dem, etwa aufgrund seiner Struktur oder seiner Funktion, eine Gefährdung für die Person ausgeht. Bei dem Gefährdungsabschnitt kann es sich insbesondere um das distale (einem festen Ende entgegengesetzte, freie) Ende eines Roboterarms, um eine an diesem Ende oder an anderer Stelle der jeweiligen Maschine vorgesehene Werkzeugaufnahme oder um ein in der Werkzeugaufnahme aufgenommenes oder als Teil der Maschine ausgebildetes Werkzeug handeln. Dabei kann die Maschine auch mehrere (gleichartige oder verschiedenartige) Gefährdungsabschnitte aufweisen.

Erfindungsgemäß umfasst das Verfahren: dass sich der bewegliche Maschinenteil gemäß einem der Maschine vorgegebenen Ablaufprogramm bewegt; und dass eine Umgebung des Gefährdungsabschnitts überwacht wird, wobei im Falle eines Eingreifens eines Objekts in ein definiertes Schutzvolumen innerhalb der überwachten Umgebung eine sicherheitsgerichtete Reaktion ausgelöst wird. Die sicherheitsgerichtete Reaktion umfasst dabei (gegebenenfalls unter anderem), dass die Bewegung des beweglichen Maschinenteils gestoppt wird, wenn das Eingreifen eine definierte Eingriffsschwelle des Schutzvolumens überschreitet. Diese Verfahrensschritte sind Teil einer Art Normalbetrieb der Maschine. Insofern umfasst das Verfahren den (normalen) Betrieb der Maschine, wobei der Betrieb die genannten Verfahrensschritte umfasst.

Im Rahmen des (normalen) Betriebs der Maschine kann die Maschine, beispielsweise von einer in die Maschine integrierten oder zu der Maschine externen Steuervorrichtung, dazu angesteuert werden, dass sich der bewegliche Maschinenteil gemäß dem vorgegebenen Ablaufprogramm bewegt. Das Ablaufprogramm kann der Maschine beispielsweise durch Parametrierung und Verknüpfung verschiedener Funktionstemplates zu einem Ablauf vorgegeben werden. Dabei können durch das Ablaufprogramm Parameter wie Bewegungsbahnen, Geschwindigkeiten von Bewegungen und Arbeitsschritte an verschiedenen Punkten des Ablaufs festgelegt werden.

Infolge der Bewegung des beweglichen Maschinenteils durchläuft der Gefährdungsabschnitt des beweglichen Maschinenteils eine dem Ablaufprogramm entsprechende Bewegungsbahn. Durch das Ablaufprogramm kann dabei nicht nur festgelegt sein, zu welchem Zeitpunkt innerhalb des Ablaufs sich der Gefährdungsabschnitt an welchem Punkt im Raum befinden soll, sondern auch, welche Ausrichtung er dabei aufweisen soll. Für Automatisierungsaufgaben umfasst das Ablaufprogramm zweckmäßigerweise, dass zumindest Teile des Ablaufprogramms wiederholt ausgeführt werden, so dass der Gefährdungsabschnitt seine Bewegungsbahn wiederholt durchläuft.

Während sich der bewegliche Maschinenteil bewegt und der Gefährdungsabschnitt somit eine Bewegungsbahn durchläuft, wird im Rahmen des (normalen) Betriebs der Maschine der Gefährdungsabschnitt abgesichert, indem die Umgebung des Gefährdungsabschnitts überwacht wird. Die Umgebung ist dabei relativ zu dem Gefährdungsabschnitt zu verstehen, bewegt sich also mit diesem mit. Das Überwachen kann insbesondere mittels eines oder mehrerer Sensoren, insbesondere Distanzsensoren, erfolgen. Die Umgebung des Gefährdungsabschnitts ist dabei nicht unbedingt auf eine feste räumliche Erstreckung relativ zu dem Gefährdungsabschnitt festgelegt, kann aber durch die Erfassungsreichweite der verwendeten Sensoren begrenzt sein, beispielsweise dem von den verwendeten Sensoren erfassbaren Messbereich entsprechen. Die überwachte Umgebung des Gefährdungsabschnitts kann demgegenüber aber auch eingeschränkt sein, etwa zur Reduzierung eines Rechenaufwands für die Auswertung der von den Sensoren erfassten Daten.

Dass die Umgebung des Gefährdungsabschnitts überwacht wird, meint dabei nicht unbedingt, dass auf jedes erfasste Ereignis in der überwachten Umgebung eine Reaktion erfolgt. Vielmehr können Reaktionen darauf beschränkt sein, nur dann ausgelöst zu werden, wenn in einem innerhalb der überwachten Umgebung definierten Schutzvolumen, das folglich kleiner als die überwachte Umgebung sein kann, ein relevantes Ereignis erfasst wird. Konkret wird im Rahmen des (normalen) Betriebs der Maschine zumindest im Falle eines Eingreifens eines Objekts in das definiertes Schutzvolumen (d. h. wenn durch das Überwachen der Umgebung festgestellt wird, dass ein Objekt in das definierte Schutzvolumen eingreift) die sicherheitsgerichtete Reaktion ausgelöst. Das Eingreifen in das Schutzvolumen muss dabei nicht unbedingt durch eine Bewegung des jeweiligen Objekts erfolgen, sondern ist relativ zu verstehen, so dass auch eine Bewegung des beweglichen Maschinenteils mit dem Gefährdungsabschnitt auf ein gegebenenfalls statisches Objekt zu dazu führen kann, dass das Objekt in das Schutzvolumen eingreift.

Bei dem Objekt kann es sich grundsätzlich um ein beliebiges Objekt handeln, welches die Bewegung des beweglichen Maschinenteils stören könnte oder durch die Bewegung des beweglichen Maschinenteils, insbesondere des Gefährdungsabschnitts, gefährdet werden könnte. Grundsätzlich sollen zumindest alle Objekte erfasst werden, deren Eingreifen in das Schutzvolumen im Rahmen der von der Maschine gemäß dem Ablaufprogramm auszuführenden Tätigkeit nicht vorgesehen ist. Das umfasst insbesondere Hände oder sonstige Körperteile einer mit der Maschine zusammenarbeitenden Person, um diese vor einer Gefährdung durch den Gefährdungsabschnitt zu schützen. Dabei ist es denkbar, dass im Rahmen der Überwachung der Umgebung auch erfasst wird, ob es sich bei einem jeweiligen in das Schutzvolumen eingreifenden Objekt um einen Menschen (oder allgemein um ein Lebewesen) oder aber um einen Gegenstand handelt, wobei die sicherheitsgerichtete Reaktion dann von der Art des erfassten Objekts abhängen kann. Eine solche Unterscheidung ist jedoch nicht unbedingt erforderlich.

Das Schutzvolumen ist zweckmäßigerweise relativ zu dem Gefährdungsabschnitt definiert, so dass es sich mit diesem mitbewegt. Vorzugsweise umhüllt oder umgibt das Schutzvolumen den Gefährdungsabschnitt derart, dass ein Objekt (zumindest ein Objekt einer gewissen Größe, etwa ein Körperteil) nicht bis in Kontakt mit dem Gefährdungsabschnitt gelangen kann, ohne zuvor in das Schutzvolumen einzugreifen. Dazu braucht der Gefährdungsabschnitt nicht unbedingt in dem Schutzvolumen selbst enthalten zu sein. Denn das Schutzvolumen kann auch lediglich als eine Art Schutzmantel ausgebildet sein, der den Gefährdungsabschnitt umgibt, also einen Innenraum begrenzt, in dem sich der Gefährdungsabschnitt befindet, beispielsweise nach Art eines Lampenschirms, der das jeweilige Leuchtmittel umgibt.

Die Form und die Maße des Schutzvolumens können sich insbesondere aus dem Detektionsvolumen (Messbereich) eines oder mehrerer für das Überwachen verwendeter Sensoren und somit insbesondere aus der Anzahl, Anordnung und Ausrichtung der Sensoren ergeben. Dabei können noch zusätzliche Begrenzungen definiert sein. Beispielsweise kann das Schutzvolumen, insbesondere wenn es sich bei den Sensoren um Distanzsensoren handelt, auf einen maximalen (und/oder einen minimalen) Abstand von den Sensoren (von allen Sensoren oder von zumindest einem jeweiligen der Sensoren) beschränkt sein. Ein Eingreifen in das Schutzvolumen kann insofern einem Unterschreiten einer bestimmten Abstandsschwelle entsprechen.

Die sicherheitsgerichtete Reaktion ist eine Reaktion auf ein externes Ereignis (Eingriff in das Schutzvolumen) und daher nicht Teil des Ablaufprogramms. Vielmehr erfolgen das Überwachen der Umgebung des Gefährdungsabschnitts und die gegebenenfalls ausgelöste sicherheitsgerichtete Reaktion unabhängig von dem Ablaufprogramm quasi als Hintergrundprozess, wobei die sicherheitsgerichtete Reaktion allerdings in das Ablaufprogramm eingreifen kann. Vorzugsweise wird die Umsetzung des Ablaufprogramms durch die sicherheitsgerichtete Reaktion jedoch nicht modifiziert, sondern nur verlangsamt oder unterbrochen und idealerweise letztlich wieder fortgesetzt (ohne Änderung des vorgegebenen Ablaufs).

Die sicherheitsgerichtete Reaktion kann ein ganzes Bündel von Maßnahmen umfassen, die nicht zwangsläufig gleichzeitig ausgelöst werden, sondern für die unterschiedliche Auslösebedingungen definiert sein können. Insbesondere können unter dem Oberbegriff der sicherheitsgerichteten Reaktion verschiedene einzelne Reaktionen zusammengefasst sein, von denen in Abhängigkeit davon, wie kritisch das Eingreifen eines jeweiligen Objekts in das Schutzvolumen ist, eine jeweilige ausgelöst wird. Das ermöglicht, auf ein Eingreifen in das Schutzvolumen in abgestufter Weise zu reagieren, beispielsweise indem die Bewegung des beweglichen Maschinenteils bei Unterschreiten eines ersten Abstands zwischen dem Objekt und dem Gefährdungsabschnitt zunächst verlangsamt wird und erst bei Unterschreiten eines kleineren zweiten Abstands vollständig gestoppt wird.

Konkret ist im Rahmen des (normalen) Betriebs der Maschine als Teil der sicherheitsgerichteten Reaktion zumindest vorgesehen, dass dann, wenn das Eingreifen des Objekts in das Schutzvolumen eine definierte Eingriffsschwelle des Schutzvolumens überschreitet, die (ablaufprogrammgemäße) Bewegung des beweglichen Maschinenteils gestoppt wird.

Die Eingriffsschwelle kann auf verschiedene Weise definiert sein, beispielsweise als zeitliche Schwelle, so dass die Bewegung gestoppt wird, wenn ein Objekt länger als einen bestimmten Zeitraum lang in das Schutzvolumen eingreift, und/oder als Abstandsschwelle, so dass die Bewegung gestoppt wird, wenn ein in das Schutzvolumen eingreifendes Objekt einen bestimmten Abstand zum Gefährdungsabschnitt unterschreitet. Die Abstandsschwelle kann dabei grundsätzlich auch richtungsabhängig definiert sein (anisotrope Abstandsschwelle), so dass sich das Objekt aus verschiedenen Richtungen unterschiedlich weit an den Gefährdungsabschnitt annähern kann, bevor die Bewegung des beweglichen Maschinenteils gestoppt wird.

Dem Schutzvolumen können mehrere verschiedene Eingriffsschwellen zugeordnet sein, so dass sich anhand der verschiedenen Eingriffsschwellen feststellen lässt, wie kritisch das Eingreifen eines jeweiligen Objekts in das Schutzvolumen ist, und somit in abgestufter Weise auf das Eingreifen reagiert werden kann.

Gemäß einer vorteilhaften Ausführungsform umfasst die sicherheitsgerichtete Reaktion, dass die (ablaufprogrammgemäße) Bewegung des beweglichen Maschinenteils verlangsamt wird, wenn das Eingreifen eine definierte weitere Eingriffsschwelle des Schutzvolumens überschreitet. Mit anderen Worten wird beim Überschreiten dieser weiteren Schwelle die Bewegung des beweglichen Maschinenteils (jedenfalls zunächst) zwar im Wesentlichen gemäß dem Ablaufprogramm, insbesondere bahntreu, fortgesetzt, jedoch mit im Vergleich zu der ablaufprogrammgemäßen Geschwindigkeit reduzierter Geschwindigkeit.

Die genannte Eingriffsschwelle und die weitere Eingriffsschwelle unterscheiden sich dadurch voneinander, dass die Bewegung des beweglichen Maschinenteils beim Überschreiten der genannten Eingriffsschwelle gestoppt und beim Überschreiten der weiteren Eingriffsschwelle lediglich verlangsamt wird, sowie dadurch, wann sie überschritten werden. Die Eingriffsschwellen sind zweckmäßigerweise so definiert, dass die weitere Eingriffsschwelle vor der genannten Eingriffsschwelle überschritten wird, so dass die Bewegung zunächst nur verlangsamt und erst später gestoppt wird. Insofern kann die weitere Eingriffsschwelle auch als erste Eingriffsschwelle bezeichnet werden, während die genannte (die andere) Eingriffsschwelle als zweite Eingriffsschwelle bezeichnet werden kann, wobei durch diese Bezeichnungen nicht ausgeschlossen werden soll, dass noch mehr weitere Eingriffsschwellen vorgesehen sind, bei deren Überschreiten die Bewegung unterschiedlich stark verlangsamt wird (im Vergleich zu der ablaufprogrammgemäßen Geschwindigkeit). Die genannte Eingriffsschwelle, deren Überschreiten zu einem Stoppen der Bewegung des beweglichen Maschinenteils führt, wird dabei vorzugsweise als letztes überschritten und kann insofern auch als letzte Eingriffsschwelle bezeichnet werden.

Erfindungsgemäß ist das Schutzvolumen variabel, nämlich von der aktuellen Position des Gefährdungsabschnitts abhängig, um eine planmäßige Annäherung des Gefährdungsabschnitts an ein oder mehrere Objekte zuzulassen. Mit anderen Worten wird für das Überwachen der Umgebung des Gefährdungsabschnitts nicht stets dasselbe Schutzvolumen (relativ zu dem Gefährdungsabschnitt) herangezogen, sondern hängt das Schutzvolumen davon ab, an welcher Position entlang der genannten dem Ablaufprogramm entsprechenden Bewegungsbahn sich der Gefährdungsabschnitt gerade befindet. Das Schutzvolumen ist insofern positionsabhängig.

Für ein jeweiliges Ablaufprogramm ist das Schutzvolumen daher zweckmäßigerweise nicht einfach als ein bestimmtes Raumvolumen relativ zu dem Gefährdungsabschnitt definiert, sondern umfasst zusätzlich einen Bezug zur jeweiligen Position entlang der Bewegungsbahn. Mit anderen Worten umfasst das für ein jeweiliges Ablaufprogramm definierte Schutzvolumen Information die es erlaubt, jeder Position des Gefährdungsabschnitts entlang der dem Ablaufprogramm entsprechenden Bewegungsbahn ein an dieser Position als das jeweilige im Hinblick auf ein Eingreifen überwachte Schutzvolumen heranzuziehendes Raumvolumen (gegebenenfalls einschließlich jeweiliger Eingriffsschwellen) zuzuordnen. Dieses Raumvolumen kann für ganze Abschnitte der Bewegungsbahn identisch definiert sein. Aufgrund der Positionsabhängigkeit des Schutzvolumens ist es aber möglich (und für eine Anpassung an eine planmäßige Annäherung des Gefährdungsabschnitts an bestimmte Objekte auch zweckmäßig), dass durch das für das jeweilige Ablaufprogramm definierte Schutzvolumen verschiedenen Punkten oder Abschnitten der Bewegungsbahn verschiedene Raumvolumina als das jeweils zu berücksichtigende Schutzvolumen zugeordnet werden,

Insofern kann der Begriff Schutzvolumen je nach Kontext unterschiedlich zu verstehen sein. Wenn er auf eine jeweilige Position des Gefährdungsabschnitt entlang der dem Ablaufprogramm entsprechenden Bewegungsbahn bezogen ist, meint er das jeweilige an dieser Position für das Überwachen auf ein Eingreifen heranzuziehende Raumvolumen; wenn der Begriff (so wie bei dem initialen Schutzvolumen und dem daraus durch Einlernen abgeleiteten angepassten Schutzvolumen, die nachstehend erläutert werden) auf das gesamte Ablaufprogramm bzw. auf den gesamten entsprechenden Bewegungsablauf bezogen ist, meint er die Gesamtheit der gegebenenfalls verschiedenen Raumvolumina, die aufgrund der Positionsabhängigkeit einem jeweiligen Punkt oder einem jeweiligen Abschnitt des Ablaufprogramms bzw. der Bewegungsbahn als das jeweilige für das Überwachen auf ein Eingreifen zu berücksichtigende Raumvolumen (gegebenenfalls einschließlich jeweiliger Eingriffsschwellen) zugeordnet sind.

Dabei kann/können insbesondere die Form und/oder die Maße (allgemein die räumliche Erstreckung) des Schutzvolumens in Abhängigkeit von der aktuellen Position des Gefährdungsabschnitts variieren. Alternativ oder zusätzlich dazu kann das Schutzvolumen auch insofern variabel sein, als die genannte Eingriffsschwelle, bei deren Überschreiten die Bewegung des beweglichen Maschinenteils gestoppt wird, und/oder eine oder mehrere weitere Eingriffsschwellen des Schutzvolumens, bei deren Überschreiten die sicherheitsgerichtete Reaktion (bzw. eine der darunter zusammengefassten einzelnen Reaktionen, wie etwa ein Verlangsamen der Bewegung) ausgelöst wird, von der aktuellen Position des Gefährdungsabschnitts abhängig ist/sind.

Bei dem einen oder den mehreren Objekten, denen sich der Gefährdungsabschnitt planmäßig annähern können soll, ohne dass die sicherheitsgerichtete Reaktion ausgelöst wird, kann es sich beispielsweise um ein zu bearbeitendes Werkstück, einen Halter oder Träger für das Werkstück und/oder um eine Arbeitsfläche handeln.

Dadurch, dass das Schutzvolumen variabel ist, kann zwar für das Ausführen des Ablaufprogramms weitgehend von einem allgemein im Hinblick auf das angestrebte Maß an Sicherheit definierten Sicherheitsvolumen ausgegangen werden; jedoch ist es zweckmäßig, in Abschnitten der Bewegung des beweglichen Maschinenteils (also in Abschnitten der genannten Bewegungsbahn des Gefährdungsabschnitts), in denen sich der Gefährdungsabschnitt planmäßig einem oder mehreren Objekten so weit annähert, dass das eine oder die mehreren Objekte in das so definierte Schutzvolumen eingreifen würden und somit die sicherheitsgerichtete Reaktion auslösen würden, von einem an die Annäherung (gegebenenfalls stufenweise oder kontinuierlich) angepassten Schutzvolumen auszugehen, in das das eine oder die mehreren Objekte nicht eingreifen. Das Schutzvolumen verändert sich somit in Abhängigkeit von der Position des Gefährdungsabschnitts, um einerseits eine jeweils möglichst hohe Sicherheit zu erzielen, dabei jedoch andererseits ein unnötiges Auslösen der sicherheitsgerichteten Reaktion zu vermeiden.

Insbesondere ist es zweckmäßig, die Positionsabhängigkeit des Schutzvolumens in Bezug auf das jeweilige Ablaufprogramm und die resultierende Bewegungsbahn des Gefährdungsabschnitts relativ zu den jeweiligen Objekten zu definieren. Für ein der Maschine neu vorgegebenes Ablaufprogramm oder eine Veränderung der Objekte, denen sich der Gefährdungsabschnitt annähern können soll, muss das variable Schutzvolumen daher zunächst eingelernt werden.

Erfindungsgemäß wird das Schutzvolumen dadurch eingelernt: dass zunächst ein initiales Schutzvolumen vorgegeben wird; dass die Maschine dazu angesteuert wird, dass sich der bewegliche Maschinenteil gemäß dem vorgegebenen Ablaufprogramm bewegt, während die Umgebung des Gefährdungsabschnitts überwacht wird; dass, wenn die Bewegung des beweglichen Maschinenteils infolge eines Eingreifens eines Objekts in das initiale Schutzvolumen gestoppt wird, mittels einer ersten Nutzereingabe ein Einlernmodus gestartet werden kann, in dem die Bewegung bahntreu fortgesetzt wird, so dass sich der Gefährdungsabschnitt entlang derselben dem Ablaufprogramm entsprechenden Bewegungsbahn bewegt, entlang der er sich auch ohne das Eingreifen eines Objekts in das Schutzvolumen und das Starten des Einlernmodus bewegen würde, und dabei Positionsdaten von Objekten in der Umgebung des Gefährdungsabschnitts erfasst werden; dass mittels einer zweiten Nutzereingabe der Einlernmodus beendet werden kann; und dass das (für ein planmäßiges Annähern an die Objekte angepasste) Schutzvolumen basierend auf den erfassten Positionsdaten definiert wird.

Mit anderen Worten erfolgt das Definieren eines für ein planmäßiges Annähern an bestimmte Objekte geeigneten Schutzvolumens nicht vorgelagert zu dem genannten (normalen) Betrieb der Maschine (etwa mittels spezieller Templates im Rahmen des Erstellens des der Maschine vorgegebenen Ablaufprogramms), sondern es ist eine Art Einlernbetrieb der Maschine vorgesehen, der in den genannten (normalen) Betrieb der Maschine eingebettet ist. Dass das Einlernen des Schutzvolumens also nachgelagert zu dem Festlegen des Ablaufprogramms und somit davon unabhängig erfolgt, ermöglicht eine besonders intuitive Nutzung der Maschine und ermöglicht außerdem, dass bestehende Ablaufprogramme einfach weitergenutzt werden können.

Beim Erstellen des Ablaufprogramms braucht somit noch kein Schutzvolumen berücksichtigt oder definiert zu werden. Vielmehr braucht das initiale Schutzvolumen erst unmittelbar vor dem ersten Durchlaufen des Ablaufprogramms in Anwesenheit der Objekte, an die sich der Gefährdungsabschnitt annähern können soll, vorgegeben zu werden, damit der genannte Einlernbetrieb durchgeführt werden kann.

Allerdings kann es zweckmäßig sein, wenn das initiale Schutzvolumen optional auch davor schon zumindest informativ aktiv ist (beispielsweise durch LED-Indikatoren), jedoch ohne, dass durch ein Eingreifen in das initiale Schutzvolumen eine sicherheitsgerichtete Reaktion ausgelöst würde. Dadurch kann vorteilhafterweise bereits beim Aufsetzen des Ablaufprogramms ersichtlich sein, in welchen Abschnitten des Ablaufprogramms eine an ein oder mehrere jeweilige Objekte angepasste Absicherung des Gefährdungsabschnitts erfolgen wird.

Für das Einlernen des Schutzvolumens in einer Art von nutzerüberwachtem Einlerndurchlauf wird das vorgegebene Ablaufprogramm, nachdem es erstellt worden ist, dann zunächst ohne eine speziell an eine innerhalb des Ablaufprogramms vorgesehene Annäherung des Gefährdungsabschnitts an das eine oder die mehreren Objekte angepasste Absicherung ausgeführt. Denn es wird dabei als das für das Überwachen auf ein Eingreifen maßgebliche Schutzvolumen das genannte initiale Schutzvolumen verwendet, das nicht an die genannte Annäherung speziell angepasst ist, sondern bei dem es sich beispielsweise um das genannte allgemein im Hinblick auf das angestrebte Maß an Sicherheit definierte Sicherheitsvolumen handeln kann. Insbesondere kann das initiale Schutzvolumen auch positionsunabhängig sein, also an jedem Punkt der von dem Gefährdungsabschnitt durchlaufenen Bewegungsbahn dieselbe räumliche Erstreckung (relativ zu dem Gefährdungsabschnitt) aufweisen. Grundsätzlich kann aber auch schon das initiale Schutzvolumen eine Positionsabhängigkeit aufweisen, ohne jedoch speziell an die genannte Annäherung angepasst zu sein.

Mit diesem initialen Schutzvolumen wird der bewegliche Maschinenteil dann gemäß dem vorgegebenen Ablaufprogramm bewegt. Gemäß dem (normalen) Betrieb der Maschine wird dabei die Umgebung des Gefährdungsabschnitts auf ein Eingreifen eines (beliebigen) Objekts in das Schutzvolumen überwacht, wobei es sich bei dem Schutzvolumen um das initiale Schutzvolumen handelt.

Da das initiale Schutzvolumen an die Annäherung an ein oder mehrere Objekte nicht angepasst ist, kommt es beim Ausführen des Ablaufprogramms dazu, dass das eine oder die mehreren Objekte in das initiale Schutzvolumen eingreifen, was gemäß dem (normalen) Betrieb der Maschine dazu führt, dass im Rahmen der sicherheitsgerichteten Reaktion die ablaufprogrammgemäße Bewegung des beweglichen Maschinenteils gestoppt wird. Erfindungsgemäß ist es in dieser Situation möglich, mittels einer ersten Nutzereingabe einen Einlernmodus zu starten. Das kann umfassen, dass immer dann, wenn die Bewegung des beweglichen Maschinenteils infolge eines Eingreifens eines Objekts in das jeweilige (d. h. in das aktuell verwendete) Schutzvolumen gestoppt wird, einem Nutzer, z. B. von einer graphischen Nutzerschnittstelle, das Eingeben der ersten Nutzereingabe angeboten wird. Insbesondere kann der Nutzer in einer solchen Situation zum Eingeben der ersten Nutzereingabe (oder wahlweise einer anderen Nutzereingabe) aufgefordert werden. Ferner kann vorgesehen sein, dass ein Eingeben der ersten Nutzereingabe überhaupt nur im Anschluss an ein Stoppen der Bewegung des beweglichen Maschinenteils infolge eines Eingreifens eines Objekts in das jeweilige Schutzvolumen möglich ist.

Je nach Situation kann das Eingeben der ersten Nutzereingabe auch ausbleiben. Denn wenn die sicherheitsgerichtete Reaktion (Stoppen der ablaufprogrammgemäßen Bewegung) durch ein Objekt ausgelöst wurde, an das sich der Gefährdungsabschnitt gemäß dem Ablaufprogramm gar nicht annähern soll, ist es zweckmäßig, die erste Nutzereingabe zu unterlassen und den Einlernmodus somit nicht zu starten.

Die Bezeichnung der ersten Nutzereingabe als erste Nutzereingabe dient dabei lediglich der begrifflichen Unterscheidung verschiedener Nutzereingaben und ist weder als Hinweis auf eine bestimmte Anzahl von Nutzereingaben noch als Hinweis auf eine bestimmte Abfolge oder Hierarchie zwischen verschiedenen Nutzereingaben zu verstehen. Entsprechendes gilt für im Folgenden noch genannte weitere Nutzereingaben.

Der durch die erste Nutzereingabe gegebenenfalls gestartete Einlernmodus unterscheidet sich von dem (normalen) Betrieb der Maschine insbesondere dadurch, dass darin die ablaufprogrammgemäße Bewegung des beweglichen Maschinenteils trotz des Eingriffs in das Schutzvolumen, der zum Stoppen der Bewegung geführt hat, fortgesetzt wird, auch wenn der Eingriff fortdauert. Insofern ist die Absicherung des Gefährdungsabschnitts durch Überwachen der Umgebung des Gefährdungsabschnitts und gegebenenfalls Auslösen der sicherheitsgerichteten Reaktion im Einlernmodus quasi ausgesetzt. Eine weitere Besonderheit des Einlernmodus ist, dass, während die Bewegung des beweglichen Maschinenteils gemäß dem Ablaufprogramm fortgesetzt wird, Positionsdaten von Objekten in der überwachten Umgebung des Gefährdungsabschnitts erfasst werden. Bei diesen Objekten kann es sich dann insbesondere um das eine oder die mehreren Objekte handeln, an die sich der Gefährdungsabschnitt planmäßig annähern können soll, ohne dass dadurch die sicherheitsgerichtete Reaktion ausgelöst wird. Die Positionsdaten können dabei insbesondere mittels derselben Sensoren erfasst werden, die auch außerhalb des Einlernmodus für das Überwachen der Umgebung des Gefährdungsabschnitts verwendet werden.

Der Einlernmodus kann schließlich mittels einer zweiten Nutzereingabe beendet werden. Das Beenden des Einlernmodus führt insbesondere dazu, dass die Maschine wieder in normaler Weise gemäß dem vorgegebenen Ablaufprogramm betrieben wird, insbesondere so, dass die Bewegung des beweglichen Maschinenteils, sofern sie noch nicht abgeschlossen ist, in ablaufprogrammgemäßer Weise fortgesetzt wird. Die im Einlernmodus erfassten Positionsdaten werden dann als Grundlage (nämlich als die genannten Referenzdaten) für die Anpassung des Schutzvolumens zumindest in demjenigen Abschnitt der Bewegung des beweglichen Maschinenteils (bzw. der Bewegungsbahn des Gefahrenabschnitts) genutzt, der im Einlernmodus durchlaufen wurde. Denn anhand der erfassten Positionsdaten lässt sich bestimmen, welche räumliche Erstreckung das Schutzvolumen in Abhängigkeit von der aktuellen Position des Gefährdungsabschnitts maximal aufweisen darf, ohne dass die Objekte, deren Positionsdaten erfasst wurden, in das Schutzvolumen eingreifen. Das ermöglicht es, das Schutzvolumen optimal an die gemäß dem Ablaufprogramm vorgesehene Annährung an die Objekte anzupassen. In den übrigen Abschnitten der Bewegung des beweglichen Maschinenteils (bzw. der Bewegungsbahn des Gefahrenabschnitts) kann dagegen beispielsweise das initiale Schutzvolumen einfach beibehalten werden.

Das erfindungsgemäße Einlernen des Schutzvolumens lässt sich vergleichsweise einfach ausführen, da es nicht vorab gesondert von der eigentlichen Umsetzung des Ablaufprogramms durchgeführt zu werden braucht und auch keine Modifikation des Ablaufprogramms erfordert. Insbesondere entfällt somit die Implementierung eines spezifischen Ablaufprogrammtemplates. Sondern das Einlernen kann genau dann, wenn es (gegebenenfalls erstmals oder auch erneut) benötigt wird, gestartet werden und erfolgt dann eingebettet in das Ablaufprogramm. Dadurch kann insgesamt die Einrichtung der Maschine für eine jeweilige Applikation vereinfacht und verkürzt werden.

Gemäß einer vorteilhaften Ausführungsform wird im Einlernmodus die Bewegung des beweglichen Maschinenteils in risikoreduzierter Weise fortgesetzt. Die Risikoreduzierung kann sich aus veränderten Bewegungsparametern der Bewegung des beweglichen Maschinenteils ergeben, die ansonsten ablaufprogrammgemäß erfolgen kann. Insbesondere kann die Bewegung im Einlernmodus mit im Vergleich zu einer dem vorgegebenen Ablaufprogramm gemäßen Geschwindigkeit reduzierter Geschwindigkeit fortgesetzt werden.

Durch das Starten des Einlernmodus wird die Sicherheitsfunktion, wonach bei einem Eingreifen in das Schutzvolumen eine sicherheitsgerichtete Reaktion ausgelöst wird, vorübergehend ausgesetzt. Dass die weitere Bewegung im Einlernmodus in risikoreduzierter Weise bzw. mit reduzierter Geschwindigkeit fortgesetzt wird, ermöglicht es, die planmäßig vorgesehene Annäherung an ein oder mehrere Objekte unter kontrollierten Bedingungen und somit trotz der ausgesetzten Sicherheitsfunktion mit einem vergleichsweise geringen Gefährdungsrisiko auszuführen. Das trägt wesentlich dazu bei, dass das Einlernen eines an das geplante Annähern angepassten Schutzvolumens in den (normalen) Betrieb der Maschine eingebettet sein kann und nicht vorab im Rahmen eines gesonderten Einlernverfahrens erfolgen muss.

Gemäß einer weiteren vorteilhaften Ausführungsform wird für diejenigen Abschnitte der (ablaufprogrammgemäßen) Bewegung des beweglichen Maschinenteils, in denen die Objekte, deren Positionsdaten im Einlernmodus erfasst worden sind, in das initiale Schutzvolumen eingreifen, das Schutzvolumen definiert, indem das initiale Schutzvolumen verkleinert wird, bis diese Objekte nicht länger darein eingreifen. Für die übrigen Abschnitte der Bewegung kann das Schutzvolumen einfach mit dem initialen Schutzvolumen gleichgesetzt bzw. das initiale Schutzvolumen beibehalten werden.

Bei dieser Ausführungsform wird für das angepasste Schutzvolumen von dem initialen Schutzvolumen ausgegangen, dessen räumliche Erstreckung für jeden Punkt der Bewegungsbahn des Gefährdungsabschnitts jeweils so weit reduziert wird, bis keines der Objekte mehr in das Schutzvolumen eingreift. Dabei kann es zweckmäßig sein, einen gewissen Sicherheitsabstand vorzusehen, das Schutzvolumen also um diesen Sicherheitsabstand weiter zu verkleinern, als mindestens erforderlich ist. Das Verkleinern des Schutzvolumens kann gestuft erfolgen, so dass der jeweilige Abschnitt der Bewegung einen oder mehrere Unterabschnitte aufweisen kann, innerhalb derer das Schutzvolumen jeweils einheitlich definiert ist. Das Schutzvolumen kann aber auch kontinuierlich definiert werden, so dass es grundsätzlich für jeden Punkt des jeweiligen Abschnitts individuell definiert ist.

Das Schutzvolumen kann in unterschiedliche Raumrichtungen unterschiedlich stark verkleinert werden, um das Schutzvolumen auch hinsichtlich seiner Form möglichst ideal an die jeweiligen Objekte anzupassen. Idealerweise reicht das angepasste Schutzvolumen im Ergebnis jeweils zumindest im Wesentlichen (insbesondere bis auf den genannten Sicherheitsabstand) bis an ein jeweiliges der Objekte heran. Das Verkleinern des Schutzvolumens kann auch eine Anpassung der genannten Eingriffsschwelle sowie gegebenenfalls weiterer Eingriffsschwellen des Schutzvolumens umfassen, die sich entsprechend der Verkleinerung verschieben, insbesondere dem Gefährdungsabschnitt annähern, können.

Gemäß einer weiteren vorteilhaften Ausführungsform wird im Einlernmodus die (gegebenenfalls in risikoreduzierter Weise fortgesetzte) Bewegung des beweglichen Maschinenteils gestoppt, sobald kein Objekt mehr in das initiale Schutzvolumen eingreift; anschließend kann der Einlernmodus dann mittels der zweiten Nutzereingabe beendet werden. Sobald durch die Überwachung der Umgebung des Gefährdungsabschnitts festgestellt wird, dass kein Objekt mehr in das initiale Schutzvolumen eingreift, besteht also die Möglichkeit, den Einlernmodus zu beenden. Insbesondere kann vorgesehen sein, dass ein Nutzer in dieser Situation zum Eingeben der zweiten Nutzereingabe aufgefordert wird, um das Einlernen des an das geplante Annähern angepassten Schutzvolumens zu quittieren und somit zu finalisieren. Vorzugsweise ist die zweite Nutzereingabe zum Beenden des Einlernmodus überhaupt nur dann möglich, wenn kein Objekt mehr in das initiale Schutzvolumen eingreift.

Der Einlernmodus muss jedoch nicht unbedingt mittels der zweiten Nutzereingabe beendet werden, nachdem die Bewegung des beweglichen Maschinenteils gestoppt wurde, weil kein Objekt mehr in das initiale Schutzvolumen eingreift. Vielmehr kann vorgesehen sein, dass der Einlernmodus wahlweise, etwa mittels einer vierten Nutzereingabe, fortgesetzt werden kann. Insbesondere kann der Nutzer dazu aufgefordert werden, wahlweise die zweite oder die vierte Nutzereingabe einzugeben. Das Fortsetzen des Einlernmodus kann beispielsweise dann sinnvoll sein, wenn basierend auf der Kenntnis des Ablaufprogramms von einem unmittelbaren erneuten Eingreifen in das initiale Schutzvolumen auszugehen ist. Wenn der Einlernmodus fortgesetzt wird, ist es daher zweckmäßig, wenn dabei nicht in besonderer Weise auf ein erneutes Eingreifen eines Objekts in das initiale Schutzvolumen reagiert wird (insbesondere die Bewegung des beweglichen Maschinenteils in diesem Fall nicht gestoppt wird und auch nicht zum Eingeben der ersten Nutzereingabe aufgefordert wird), da der Einlernmodus bereits gestartet ist. Allerdings wird bei einem Fortsetzen des Einlernmodus nach einem erneuten Eingreifen eines Objekts in das initiale Schutzvolumen die Bewegung des beweglichen Maschinenteils vorteilhafterweise wiederum gestoppt, sobald erneut kein Objekt mehr in das initiale Schutzvolumen eingreift; anschließend kann der Einlernmodus dann wiederum wahlweise (mittels der zweiten bzw. der vierten Nutzereingabe) beendet oder fortgesetzt werden.

Gemäß einer weiteren vorteilhaften Ausführungsform wird nach dem Beenden des Einlernmodus die Bewegung des beweglichen Maschinenteils gemäß dem Ablaufprogramm fortgesetzt. Sofern die Bewegung des beweglichen Maschinenteils im Einlernmodus in risikoreduzierter Weise fortgesetzt worden ist, wird sie nach dem Beenden des Einlernmodus vorzugsweise wieder in nicht risikoreduzierter Weise, insbesondere wieder mit derselben Geschwindigkeit wie vor dem Starten des Einlernmodus, fortgesetzt. Vorzugsweise unterscheiden sich die Art des Betriebs der Maschine vor dem Einlernmodus (vor der ersten Nutzereingabe) und die Art des Betriebs der Maschine nach dem Einlernmodus (nach der zweiten Nutzereingabe) allenfalls insofern voneinander, als die Umgebung des Gefährdungsabschnitts nach dem Einlernen in Bezug auf ein anderes Schutzvolumen (nämlich in Bezug auf das durch das Einlernen an das geplante Annähern an ein oder mehrere Objekte angepasste Schutzvolumen) überwacht wird als vor dem Einlernen.

Gemäß einer weiteren vorteilhaften Ausführungsform wird, falls nach dem Stoppen der Bewegung des beweglichen Maschinenteils infolge eines Eingreifens eines Objekts in das Schutzvolumen die erste Nutzereingabe ausbleibt (und der Einlernmodus also nicht gestartet wird), die Bewegung des beweglichen Maschinenteils nicht fortgesetzt wird, solange das Objekt in das Schutzvolumen eingreift. Denn bei dem Objekt, das zu dem Stoppen der Bewegung geführt hat, muss es sich nicht zwangsläufig um ein Objekt handeln, an das sich der Gefährdungsabschnitt annähern können soll, sondern kann es sich auch um ein Objekt handeln, dass die Bewegung des beweglichen Maschinenteils stört und/oder durch den Gefährdungsabschnitt gefährdet werden kann. Durch die erste Nutzereingabe kann bestätigt werden, dass es sich um ein Objekt handelt, an das eine Annäherung möglich sein soll; bleibt die erste Nutzereingabe dagegen aus, ist davon auszugehen, dass es sich um ein störendes bzw. gefährdetes Objekt handelt, so dass die sicherheitsgerichtete Reaktion des Stoppens der Bewegung beibehalten wird, vorzugsweise mindestens so lange, wie das Objekt noch in das Schutzvolumen eingreift. Auch anschließend (wenn das Objekt nicht länger in das Schutzvolumen eingreift) wird die Bewegung nicht unbedingt direkt fortgesetzt. Sondern es kann vorgesehen sein, dass zunächst ein gewisser Zeitraum abgewartet wird, in dem kein weiteres Eingreifen erfolgt, und/oder dass das Fortsetzen der Bewegung eine dritte Nutzereingabe voraussetzt, durch welche das Fortsetzen freigegeben wird.

Gemäß einer weiteren vorteilhaften Ausführungsform wird, wenn die Bewegung des beweglichen Maschinenteils infolge eines Eingreifens eines Objekts in das aktuelle bzw. initiale Schutzvolumen gestoppt wird, ein Nutzer der Maschine dazu aufgefordert, wahlweise die erste Nutzereingabe oder eine (die vorstehend genannte) dritte Nutzereingabe einzugeben, mittels welcher eine Fortsetzung der Bewegung des beweglichen Maschinenteils gemäß dem Ablaufprogramm (mit ablaufprogrammgemäßen Bewegungsparametern, insbesondere mit ablaufprogrammgemäßer Geschwindigkeit) freigegeben wird. Im Falle eines Eingebens der dritten Nutzereingabe muss die Bewegung nicht unbedingt direkt fortgesetzt werden. Insbesondere kann (entsprechend der vorstehenden Ausführungsform) eine zusätzliche Voraussetzung für das Fortsetzen der Bewegung sein, dass kein Objekt mehr in das Schutzvolumen eingreift sowie gegebenenfalls dass außerdem ein gewisser Zeitraum seit dem letzten Eingreifen verstrichen ist.

Gemäß einer vorteilhaften Ausführungsform wird die Umgebung des Gefährdungsabschnitts mittels eines oder mehrerer Sensoren, insbesondere eines oder mehrerer berührungsloser Distanzsensoren, überwacht. Das Überwachen umfasst das Erfassen eines Eingreifens in das Schutzvolumen. Das Schutzvolumen wird dabei zweckmäßigerweise von dem einen oder den mehreren Sensoren aufgespannt. Die Sensoren werden vorzugsweise mit dem beweglichen Maschinenteil mitbewegt, beispielsweise indem sie innerhalb des Gefährdungsabschnitts oder daran angrenzend an dem beweglichen Maschinenteil angeordnet sind. Die Sensoren können insbesondere ringförmig oder auf andere Weise rotationssymmetrisch angeordnet sein. Aus der Anordnung sowie aus der Ausrichtung, insbesondere aus dem jeweiligen Anstellwinkel, der Sensoren kann sich dann, gegebenenfalls in Verbindung mit Abstandsschwellen, die Form des Schutzvolumens ergeben.

Als Distanzsensoren können Sensoren verwendet werden, welche einen Einzeldistanzwert erzeugen, oder auch Mehrfachsensoren, welche Distanzwerte mehrerer benachbarter Messpunkte erzeugen. Bei dem Messprinzip, nach dem die Sensoren funktionieren, kann es sich um ein optisches Messprinzip, ein akustisches Messprinzip (z. B. mittels Ultraschalls) oder ein elektromagnetisches Messprinzip (z. B. mittels RADAR) handeln. Im Falle eines optischen Messprinzips können insbesondere sogenannte SPAD (Single-Photon-Avalanche-Dioden) als Sensoren verwendet werden.

Vorzugsweise werden die genannten Positionsdaten mittels des einen oder zumindest eines der mehreren Sensoren erfasst, d. h. mittels desselben einen Sensors oder mittels zumindest eines derselben mehreren Sensoren (gegebenenfalls mittels genau derselben mehreren Sensoren), mittels derer auch die Umgebung des Gefährdungsabschnitts überwacht wird. Das ist jedoch nicht zwingend der Fall. Grundsätzlich können auch andere als die für das Überwachen verwendeten Sensoren für das Erfassen der Positionsdaten verwendet werden.

Gemäß einer weiteren vorteilhaften Ausführungsform ist das Ablaufprogramm vom Schutzvolumen unabhängig. Damit ist insbesondere gemeint, dass das Ablaufprogramm ohne Berücksichtigung des Schutzvolumens (sei es eines initialen Schutzvolumens oder eines bereits in geeigneter Weise angepassten Schutzvolumens) zusammengestellt und der Maschine vorgegebenen werden kann. Es braucht somit bei der Programmierung des Ablaufprogramms noch kein endgültiges Schutzvolumen definiert und auch kein Einlernen eines Schutzvolumens, etwa mittels eines dezidierten Templates, vorgesehen zu werden.

Insbesondere ist es ferner bevorzugt, dass das Ablaufprogramm durch das Einlernen des Schutzvolumens nicht modifiziert wird. In das Ablaufprogramm braucht beispielsweise kein spezieller abgesicherter Wegpunkt eingefügt zu werden, der angefahren werden muss, damit von dort aus in einem eigens dafür vorgesehenen Programmblock Referenzdaten für ein Definieren des Schutzvolumens erfasst werden können. Auch ansonsten wird das Ablaufprogramm weder für das Einlernen noch infolge des Einlernens des Schutzvolumens verändert. Zwar wird es im Einlernmodus unter Umständen vorübergehend in risikoreduzierter Weise ausgeführt, insgesamt wird es jedoch beibehalten und im Anschluss an den Einlernmodus wieder unverändert weiterverwendet.

Es kann jedoch auch vorgesehen sein, dass die Bewegung des beweglichen Maschinenteils in denjenigen Abschnitten des Ablaufprogramms, in denen das Schutzvolumen durch das beschriebene Einlernen an Objekte, an die sich der Gefährdungsabschnitt annähern können soll, angepasst worden ist, außerdem risikoreduziert, insbesondere mit verminderter Geschwindigkeit, ausgeführt wird. Dazu braucht das Ablaufprogramm jedoch nicht unbedingt modifiziert zu werden, sondern es kann ausreichen, wenn die Maschine dazu angesteuert wird, dass das vorgegebene Ablaufprogramm in den genannten Abschnitten (ähnlich wie im Einlernmodus) in risikoreduzierter Weise ausgeführt wird. Die Risikoreduzierung kann dabei geringer als im Einlernmodus sein, insbesondere kann die Geschwindigkeit weniger stark vermindert sein als im Einlernmodus.

Gemäß einer weiteren vorteilhaften Ausführungsform ist das Schutzvolumen für eine planmäßige Annäherung an veränderte Objekte anpassbar, indem das beschriebene Einlernen wiederholt wird, wobei dann bei dem wiederholten Einlernen als das initiale Schutzvolumen das zuletzt eingelernte Schutzvolumen vorgegeben wird. Die veränderten Objekte sind insbesondere gegenüber denjenigen Objekten verändert, deren Positionsdaten im Rahmen des vorangehenden Einlernens des Schutzvolumens erfasst worden sind. Dabei können die veränderten Objekte insbesondere insofern verändert sein, als sich die Anzahl der Objekte, ihre Lage im Raum und/oder ihre Anordnung relativ zueinander verändert hat/haben und/oder als ein oder mehrere der Objekte gegen andere Objekte ausgetauscht worden sind. Grundsätzlich kommt jede Veränderung in Betracht, die es erforderlich macht, das Schutzvolumen (erneut) anzupassen, um eine planmäßige Annäherung an die Objekte zuzulassen, zugleich aber die Absicherung des Gefährdungsabschnitts durch das Überwachen seiner Umgebung möglichst weitgehend beizubehalten.

Ein Vorteil des erfindungsgemäßen Verfahrens ist dabei, dass eine (auch mehrfach) wiederholte Anpassung des Schutzvolumens an veränderte Gegebenheiten im Wesentlichen keine besonderen Maßnahmen erfordert. Vielmehr kann sich im Rahmen des beschriebenen Verfahrens automatisch die Möglichkeit eines erneuten Einlernens des Schutzvolumens dadurch ergeben, dass aufgrund der Veränderung der Objekte eines der Objekte in das aktuelle (zuletzt eingelernte) Schutzvolumen eingreift, woraufhin dann mittels der ersten Nutzereingabe der Einlernmodus gestartet werden kann. Das Einlernen des neu angepassten Schutzvolumens läuft dann auf dieselbe Weise ab wie das zuvor durchgeführte Einlernen. Für den Fall, dass die Veränderung der Objekte dazu führt, dass sich das Schutzvolumen insgesamt wieder vergrößern kann, kann es auch zweckmäßig sein, für das Anpassen des Schutzvolumens an veränderte Objekte das Schutzvolumen vor dem wiederholten Einlernen zunächst zurückzusetzen, beispielsweise auf ein ursprüngliches (für das erste Einlernen verwendetes) initiales Schutzvolumen.

Die erfindungsgemäße Maschine weist einen beweglichen Maschinenteil mit einem Gefährdungsabschnitt auf. Ferner umfasst die Maschine eine Steuervorrichtung, die zu einem sicheren Betrieb der Maschine gemäß einem der vorstehend beschriebenen Verfahren ausgebildet ist. Die Maschine, der bewegliche Maschinenteil sowie der Gefährdungsabschnitt können dabei jeweils insbesondere auf eine der vorstehend beschriebenen Weisen ausgebildet sein.

Dass die Steuervorrichtung zu einem sicheren Betrieb der Maschine ausgebildet ist, kann insbesondere umfassen, dass sie dazu ausgebildet ist: den beweglichen Maschinenteil dazu anzusteuern, sich gemäß einem der Steuervorrichtung vorgegebenen Ablaufprogramm zu bewegen; sowie eine Umgebung des Gefährdungsabschnitts zu überwachen und im Falle eines Eingreifens eines Objekts in ein definiertes Schutzvolumen innerhalb der überwachten Umgebung eine sicherheitsgerichtete Reaktion auszulösen, die umfasst, dass die Bewegung des beweglichen Maschinenteils gestoppt wird, wenn das Eingreifen eine definierte Eingriffsschwelle des Schutzvolumens überschreitet; wobei das Schutzvolumen variabel, nämlich von der aktuellen Position des Gefährdungsabschnitts abhängig, ist, um eine planmäßige Annäherung des Gefährdungsabschnitts an ein oder mehrere Objekte zuzulassen. Insbesondere ist die Steuereinrichtung (ferner) dazu ausgebildet, das Schutzvolumen gemäß einem der vorstehend beschriebenen Verfahren einzulernen. Die Vorteile des jeweiligen Verfahrens ergeben sich dann in entsprechender Weise auch für die Maschine.

Gemäß einer vorteilhaften Ausführungsform weist die Maschine ferner einen oder mehrere Sensoren, insbesondere einen oder mehrere berührungslose Distanzsensoren, auf, die mit dem beweglichen Maschinenteil mitbewegt werden, wobei die Steuervorrichtung dazu ausgebildet ist, den einen oder die mehreren Sensoren dazu anzusteuern, die Umgebung des Gefährdungsabschnitts zu überwachen. Dazu kann die Steuervorrichtung den einen oder die mehreren Sensoren beispielsweise dazu ansteuern, innerhalb der Umgebung des Gefährdungsabschnitts Messungen vorzunehmen, und die aus den Messungen resultierenden Messwerte dann im Hinblick darauf auswerten, ob ein Objekt in das Schutzvolumen eingreift oder nicht. Im Falle eines Eingreifens in das Schutzvolumen kann die Steuervorrichtung den beweglichen Maschinenteil dazu ansteuern, die ablaufprogrammgemäße Bewegung zu unterbrechen.

Gemäß einer weiteren vorteilhaften Ausführungsform ist die Steuervorrichtung dazu ausgebildet, den einen oder zumindest einen der mehreren Sensoren dazu anzusteuern, im Einlernmodus die Positionsdaten der jeweiligen Objekte zu erfassen. Anschließend kann die Steuervorrichtung die Positionsdaten dazu verwenden, das Schutzvolumen neu, nämlich angepasst an eine planmäßige Annäherung des Gefährdungsabschnitts an die Objekte, deren Positionsdaten erfasst worden sind, zu definieren.

Die Erfindung wird im Folgenden lediglich beispielhaft unter Bezugnahme auf die Figuren weiter erläutert.
- Fig. 1: zeigt in schematischer Darstellung eine erfindungsgemäße Maschine gemäß einer exemplarischen Ausführungsform.
- Fig. 2 bis 5: zeigen verschiedene Zustände der Maschine während eines Einlernens eines Schutzvolumens in vergrößerten Ausschnittsdarstellungen.
- Fig. 6: zeigt eine schematische Visualisierung einer exemplarischen Ausführungsform des erfindungsgemäßen Verfahrens.

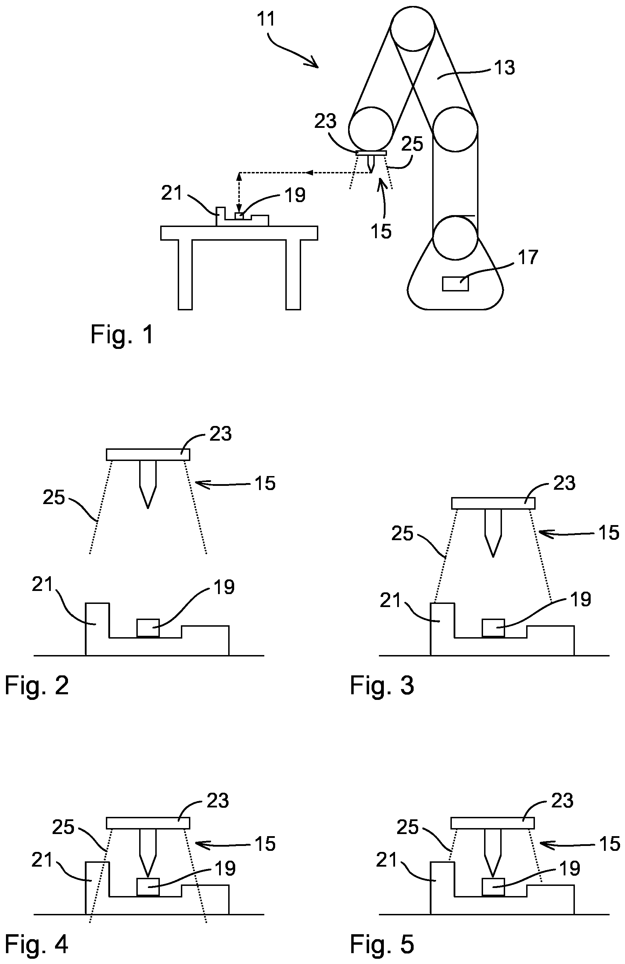

Bei der in Fig. 1 gezeigten exemplarischen Ausführungsform einer erfindungsgemäßen Maschine 11 handelt es sich um einen Roboter, der einen beweglichen Maschinenteil 13 in Form eines Roboterarms aufweist. An dem distalen, freien Ende des beweglichen Maschinenteils 13 weist die Maschine 11 eine Werkzeugaufnahme mit einem Werkzeug auf, von dem aufgrund seiner Struktur (scharfkantig, spitz) und seiner Funktion eine Gefährdung für einen mit der Maschine 11 zusammenarbeitenden Menschen (nicht gezeigt) ausgeht. Insofern stellt die Werkzeugaufnahme mit dem Werkzeug einen Gefährdungsabschnitt 15 des beweglichen Maschinenteils 13 dar.

Die Maschine 11 weist ferner eine Steuervorrichtung 17 auf, die zum Betrieb der Maschine ausgebildet ist, nämlich insbesondere dazu, den beweglichen Maschinenteil 13 gemäß einem der Steuervorrichtung 17 der Maschine 11 vorgegebenen Ablaufprogramm zu bewegen. Aufgrund dieser Bewegung des beweglichen Maschinenteils 13 bewegt sich der Gefährdungsabschnitt 15 des beweglichen Maschinenteils 13 entlang einer dem Ablaufprogramm entsprechenden Bewegungsbahn. Ein Beispiel für zumindest einen Teil einer solchen Bewegungsbahn ist in Fig. 1 in Form einer gestrichelten Linie gezeigt, die auf eine Werkzeugspitze des genannten Werkzeugs als stellvertretenden Punkt für den gesamten Gefährdungsabschnitt 15 bezogen dargestellt ist.

Wie durch die Pfeilspitzen entlang der Bewegungsbahn veranschaulicht wird, bewegt sich der Gefährdungsabschnitt 15 gemäß dem beispielhaften Ablaufprogramm zunächst horizontal bis über ein Objekt 19, bei dem es sich um ein Werkstück handelt, das an einem weiteren Objekt 21 angeordnet ist, bei dem es sich um einen Werkstückhalter handelt, der auf einer Arbeitsfläche aufliegt; von dort aus bewegt sich der Gefährdungsabschnitt 15 vertikal auf das Objekt 19 zu, bis die Werkzeugspitze in Kontakt mit dem Objekt 19 ist, beispielsweise um das Werkstück zu bearbeiten; und bewegt sich schließlich vertikal wieder von dem Objekt 19 weg. Anschließend kann sich der Gefährdungsabschnitt 15 auch wieder horizontal in die in Fig. 1 gezeigte Ausgangsposition zurückbewegen. In den Fig. 2 bis 5 sind der Gefährdungsabschnitt 15 und die Objekte 19, 21 in vergrößerten Ausschnittsdarstellungen für verschiedene Zustände der genannten vertikalen Bewegung des Gefährdungsabschnitts 15 gezeigt.

Die Maschine 11 weist ferner mehrere Sensoren 23, nämlich berührungslose Distanzsensoren, in Form einer ringförmigen Sensoranordnung auf, die an dem distalen Ende des beweglichen Maschinenteils 13 angeordnet ist und die Gefährdungsabschnitt 15 umgibt. Die Sensoren 23 sind dabei derart angeordnet, dass sie von der Steuervorrichtung 17 dazu angesteuert werden können, eine Umgebung des Gefährdungsabschnitts 15 zu überwachen. Aufgrund ihrer Anordnung und Ausrichtung können die Sensoren 23 dabei Distanzen von Objekten relativ zu dem jeweiligen Sensor 23 entlang eines Messbereichs erfassen, der bei der beispielhaften Ausführungsform im Wesentlichen die Form eines Kegelstumpfmantels aufweist.

Durch Begrenzung dieses Messbereichs auf einen bestimmten maximalen Abstand von den Sensoren 23 wird ein Schutzvolumen 25 definiert, das die Form eines Lampenschirms aufweist. Das Schutzvolumen 25 ist in den Fig. 1 bis 5 durch punktierte Linien veranschaulicht. Der genannte maximale Abstand kann dabei einer definierten Eingriffsschwelle des Schutzvolumens 25 entsprechen.

Im Zusammenspiel der Steuervorrichtung 17 einerseits mit dem beweglichen Maschinenteil 13 und andererseits mit den Sensoren 23 kann die Maschine 11 zum Schutz einer mit der Maschine 11 zusammenarbeitenden Person in sicherer Weise betrieben werden. Dazu wird mittels der Sensoren 23 das Schutzvolumen 25 überwacht und im Falle eines Eingreifens eines Objekts in das Schutzvolumen 25 eine sicherheitsgerichtete Reaktion ausgelöst. Konkret wird bei der exemplarischen Ausführungsform die ablaufprogrammgemäße Bewegung des beweglichen Maschinenteils 13 gestoppt, sobald mittels der Sensoren 23 festgestellt wird, dass die genannte Eingriffsschwelle des Schutzvolumens 25 überschritten wird, dass sich also ein Objekt dem Gefährdungsabschnitt 15 bis auf einen Abstand angenähert hat, der kleiner als der genannte maximale Abstand ist. Dadurch wird die Bewegung des beweglichen Maschinenteils 13 sofort angehalten, sobald sich irgendein Objekt, beispielsweise ein Körperteil (etwa eine Hand) der genannten Person, dem Gefährdungsabschnitt 15 zu sehr nähert. Dadurch wird das Risiko eines Unfalls wesentlich reduziert.

Allerdings wird die sicherheitsgerichtete Reaktion auch dann ausgelöst, wenn sich der Gefährdungsabschnitt 15 planmäßig, d. h. gemäß dem vorgegebenen Ablaufprogramm, dem Objekt 19 annähert (vgl. die Abfolge der Fig. 2 bis 4), da dabei die Objekte 19, 21 in das Schutzvolumen 25 eingreifen (vgl. Fig. 4), sofern durchgehend dasselbe Schutzvolumen 25 verwendet wird. Es ist daher zweckmäßig, das Schutzvolumen 25 für die planmäßige Annäherung des Gefährdungsabschnitts 15 an die Objekte 19, 21 in Abhängigkeit von seiner Position entlang des genannten Bewegungsablaufs zu definieren und es dabei für Positionen in der Nähe der Objekte 19, 21 derart anzupassen, dass sie die sicherheitsgerichtete Reaktion nicht (mehr) auslösen. Wenn sich der Gefährdungsabschnitt 15 erstmalig an eine bestimmte Anordnung von Objekten 19, 21 annähert, muss das Schutzvolumen 25 daher zunächst entsprechen erst eingelernt, d. h. an diese bestimmte Anordnung angepasst, werden.

Eine solche Anpassung kann beispielsweise darin bestehen, dass der maximale Abstand von den Sensoren 23, auf den das Schutzvolumen 25 begrenzt ist, (und somit auch die genannte Eingriffsschwelle) zumindest für den Abschnitt der Bewegung, in dem sich der Gefährdungsabschnitt 15 in der Nähe der Objekte 19, 21 befindet, in geeigneter Weise verringert wird. Ein Beispiel für ein angepasstes Schutzvolumen 25 ist in Fig. 5 gezeigt, in der auch zu erkennen ist, dass die Anpassung (hier: die Verringerung des maximalen Abstands von den Sensoren 23) ausrichtungsabhängig sein kann (links stärker als rechts), damit das Schutzvolumen 25 an eine entsprechend unregelmäßige Struktur der Objekte 19, 21 angepasst sein kann.

Die Anpassung des Schutzvolumens 25 kann dabei auch von der Position des Gefährdungsabschnitts 15 entlang seiner Bewegungsbahn abhängen. In Fig. 5 befindet sich der Gefährdungsabschnitt 15 gerade am Umkehrpunkt seiner vertikalen Bewegung auf das Objekt 19 zu bzw. von dem Objekt 19 weg, an dem für die Anpassung des Schutzvolumens 25 der genannte maximale Abstand am stärksten verringert werden muss. In Positionen zwischen der in Fig. 3 gezeigten Position, in der das Objekt 21 gerade minimal in das Schutzvolumen 25 eingreift, und der in Fig. 5 gezeigten Position des Gefährdungsabschnitts 15 kann der maximale Abstand im Vergleich dazu in geringerem Maße verringert werden. Beispielsweise kann das angepasste Schutzvolumen 25 kontinuierlich in Abhängigkeit von der jeweiligen Position des Gefährdungsabschnitts 15 an die Objekte 19, 21 angepasst sein. Die Anpassung kann aber auch gestuft sein bis hin dazu, dass das Schutzvolumen 25 entlang des gesamten Abschnitts der Bewegungsbahn von der in Fig. 3 gezeigten Position, über die in Fig. 5 gezeigte Position zurück in die in Fig. 3 gezeigte Position auf die in Fig. 5 veranschaulichte Weise definiert ist.

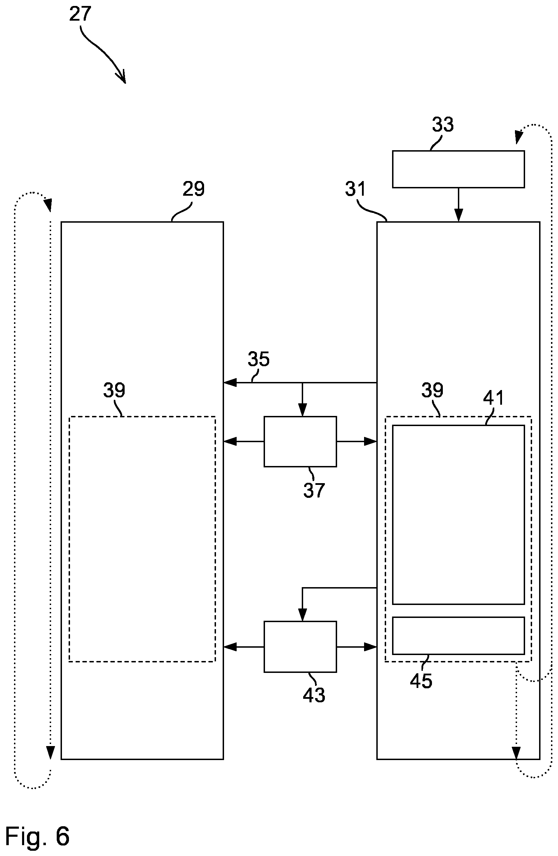

Das Einlernen des Schutzvolumens 25 zur Anpassung an bestimmte Objekte 19, 21 kann gemäß der in Fig. 6 gezeigten Visualisierung einer exemplarischen Ausführungsform des erfindungsgemäßen Verfahrens 27 zum sicheren Betrieb einer Maschine 11 erfolgen. Das Verfahren 27 umfasst einen Block 29, in dem sich der bewegliche Maschinenteil 13 gemäß einem der Maschine 11 vorgegebenen Ablaufprogramm bewegt. Das Durchlaufen des Ablaufprogramms wird in Fig. 6 durch einen punktierten Pfeil (links) symbolisiert, der sich vertikal entlang des Blocks 29 erstreckt; durch einen weiteren punktierten Pfeil, der das Ende des genannten Pfeils mit dessen Anfang verbindet, so dass die beiden Pfeile eine Schleife bilden, wird symbolisiert, dass das Ablaufprogramm mehrfach durchlaufen werden kann.

Parallel zur ablaufprogrammgemäßen Bewegung des beweglichen Maschinenteils 13 in Block 29 wird in einem Block 31 fortlaufend die Umgebung des Gefährdungsabschnitts 15 überwacht. Dabei wird mittels der Sensoren 23 überwacht, ob irgendein Objekt das jeweilige Schutzvolumen 25 innerhalb der Umgebung des Gefährdungsabschnitts 15 eingreift. Als Schutzvolumen 25 wird dabei durch den Block 33 zunächst ein initiales Schutzvolumen vorgegeben, bei dem es sich beispielsweise um das in den Fig. 1 bis 4 veranschaulichte Schutzvolumen handelt. Im Falle eines Eingreifens eines Objekts in das Schutzvolumen 25 (beispielsweise in der in Fig. 3 gezeigten Position des Gefährdungsabschnitts 15) wird eine sicherheitsgerichtete Reaktion ausgelöst, die umfasst, dass die Bewegung des beweglichen Maschinenteils 13 gestoppt wird, wenn das Eingreifen die genannte Eingriffsschwelle des Schutzvolumens 25 überschreitet. Das Stoppen der Bewegung im Rahmen der sicherheitsgerichtete Reaktion wird durch einen Pfeil 35 symbolisiert. Soweit entspricht das Vorgehen dem Normalbetrieb der Maschine 11.

Sofern es sich bei dem Objekt, dass in das Schutzvolumen 25 eingegriffen hat, um eines der Objekte 19, 21 handelt, an die sich der Gefährdungsabschnitt 15 planmäßig annähern können soll, muss das Schutzvolumen 25 für dieses planmäßige Annähern angepasst werden. Dazu kann, nachdem die Bewegung des beweglichen Maschinenteils 13 gestoppt worden ist, ein Nutzer in dem Block 37 eine erste Nutzereingabe eingeben und darüber einen Einlernmodus 39 starten, der sich sowohl auf das Bewegen des beweglichen Maschinenteils 13 gemäß dem Ablaufprogramms im Block 29 als auch auf das Überwachen der Umgebung des Gefährdungsabschnitts 15 im Block 31 auswirkt. In diesem Einlernmodus 39 wird zum einen die Bewegung des beweglichen Maschinenteils 13 zwar fortgesetzt, allerdings (bei der vorliegenden exemplarischen Ausführungsform) in risikoreduzierter Weise, nämlich mit reduzierter Geschwindigkeit. Zum anderen werden im Einlernmodus 39 in dem Block 41 mittels der Sensoren 23 Positionsdaten der Objekte 19, 21 erfasst.

Wenn sich die Gefahrenstelle 15 entlang ihrer ablaufprogrammgemäßen Bewegungsbahn wieder so weit von den Objekten 19, 21 entfernt hat, dass diese nicht länger in das Schutzvolumen 25 eingreifen, kann ein Nutzer in dem Block 43 eine zweite Nutzereingabe eingeben und den Einlernmodus 39 dadurch beenden. Als Abschluss des Einlernmodus 39 wird dann im Block 45 basierend auf den erfassten Positionsdaten der Objekte 19, 21 ein positionsabhängig angepasstes Schutzvolumen 25 definiert. Dabei ergibt sich in der Regel, dass sich das angepasste Schutzvolumen 25 lediglich in dem Abschnitt des Ablaufprogramms zwischen der ersten Nutzereingabe und der zweiten Nutzereingabe von dem initialen Schutzvolumen unterscheidet und in den übrigen Abschnitten des Ablaufprogramms zu dem initialen Schutzvolumen identisch ist. Nach dem Beenden des Einlernmodus 39 wird die ablaufplangemäße Bewegung des beweglichen Maschinenteils 13 im Block 29 wieder in nicht risikoreduzierter Weise, also wieder mit der gemäß dem Ablaufplan vorgesehenen Geschwindigkeit, fortgesetzt.

Während des Fortsetzens der ablaufplangemäßen Bewegung kann für das ebenfalls fortgesetzte Überwachen der Umgebung des Gefährdungsabschnitts 15 dann bereits das positionsabhängig angepasste Schutzvolumen 25 verwendet werden, was in Fig. 6 durch einen vertikalen punktierten Pfeil (rechts unten) symbolisiert wird, wobei das angepasste Schutzvolumen 25 in diesem Abschnitt des Ablaufprogramms aber (wie vorstehend erwähnt) zu dem initialen Schutzvolumen identisch sein kann. Spätestens bei einem erneuten Durchlaufen des Ablaufprogramms (Block 29) wird das in dem Block 45 definierte Schutzvolumen 25 dann für das Überwachen der Umgebung des Gefährdungsabschnitts 15 verwendet und dazu in dem Block 33 als neues positionsabhängiges Schutzvolumen 25 dem Block 31 vorgegeben (vgl. den weiteren punktierten Pfeil rechts, der zurück zum Block 33 führt). In Abschnitten des Ablaufprogramms, in denen der Gefährdungsabschnitt 15 von den Objekten 19, 21 entfernt ist und daher keine Anpassung des Schutzvolumens 25 erfolgt ist, unterscheidet sich dieses neue Schutzvolumen 25 nicht von dem ursprünglichen initialen Schutzvolumen. Gemäß seiner Positionsabhängigkeit ist das neue Schutzvolumen 25 jedoch in solchen Abschnitten, in denen eine planmäßige Annäherung an die Objekte 19, 21 vorgesehen ist und zu einem Eingreifen der Objekte 19, 21 in das ursprüngliche initiale Schutzvolumen führen würde, gegenüber dem ursprünglichen initialen Schutzvolumen so angepasst, dass die Objekte 19, 21 nicht in das Schutzvolumen 25 eingreifen.

Mit dem neuen Schutzvolumen 25 kann sich das Verfahren 27 dann immer weiter fortsetzen. Falls dabei erneut ein oder mehrere Objekte, an die sich der Gefährdungsabschnitt 15 annähern können soll, in das jeweilige Schutzvolumen 25 eingreifen (beispielsweise wegen einer veränderten Anordnung der Objekte 19, 21 oder einer sonstigen Veränderung an den Objekten 19, 21), kann/können erneut mittels der ersten Nutzereingabe der Einlernmodus 39 gestartet, Positionsdaten der jeweiligen Objekte erfasst und basierend auf den erfassten Positionsdaten ein neu angepasstes Schutzvolumen 25 definiert werden. Insofern kann das in dem Block 45 definierte neue Schutzvolumen 25, das bei dem jeweils nachfolgenden Durchlaufen des Ablaufprogramms dem Block 31 in dem Block 33 vorgegeben wird, für diesen nachfolgenden Durchlauf als ein neues initiales Schutzvolumen betrachtet werden, das positionsabhängig ist und sich von dem ursprünglichen initialen Schutzvolumen nur in dem Abschnitt der Annäherung an die Objekte 19, 21 unterscheidet.

Die besondere Einfachheit des Verfahrens 27 ergibt sich dabei insbesondere daraus, dass das Einlernen nicht eigens eingeplant, beispielsweise an einem bestimmten Punkt des Ablaufprogramms in dieses eingebaut oder von vornherein in diesem vorgesehen, werden muss, sondern automatisch stets dann möglich ist, wenn es nach einer Änderung der Gegebenheiten erstmals erforderlich ist, das Schutzvolumen 25 an diese anzupassen. Der Nutzer braucht dazu lediglich mittels der ersten Nutzereingabe zu bestätigen, dass das Stoppen der ablaufprogrammgemäßen Bewegung von einem Objekt ausgelöst wurde, an das eine Annäherung möglich sein soll, und dass daher der Einlernmodus 39 gestartet werden soll, und schließlich mittels der zweiten Nutzereingabe zu bestätigen, dass das Schutzvolumen neu, nämlich basierend auf den während des Einlernmodus 39 erfassten Positionsdaten der jeweiligen Objekte, definiert werden soll. So kann auf besonders einfache und komfortable Weise ein sicherer Betrieb der Maschine erreicht werden.

### Bezugszeichen

- 11: Maschine
- 13: beweglicher Maschinenteil
- 15: Gefährdungsabschnitt
- 17: Steuervorrichtung
- 19, 21: Objekt
- 23: Sensoren
- 25: Schutzvolumen
- 27: Verfahren zum sicheren Betrieb einer Maschine
- 29-37: Blöcke/Pfeile zur Visualisierung von Verfahrensabläufen
- 39: Einlernmodus
- 41-45: Blöcke zur Visualisierung von Verfahrensabläufen

## Patentansprüche

1. Verfahren (27) zum sicheren Betrieb einer Maschine (11), die einen beweglichen Maschinenteil (13) mit einem Gefährdungsabschnitt (15) aufweist, insbesondere im Rahmen einer Mensch-Roboter-Kollaboration,
wobei das Verfahren (27) umfasst:
- dass sich der bewegliche Maschinenteil (13) gemäß einem der Maschine (11) vorgegebenen Ablaufprogramm bewegt; und
- dass eine Umgebung des Gefährdungsabschnitts (15) überwacht wird,
wobei im Falle eines Eingreifens eines Objekts (19, 21) in ein definiertes Schutzvolumen (25) innerhalb der überwachten Umgebung eine sicherheitsgerichtete Reaktion ausgelöst wird, die umfasst, dass die Bewegung des beweglichen Maschinenteils (13) gestoppt wird, wenn das Eingreifen eine definierte Eingriffsschwelle des Schutzvolumens (25) überschreitet;
wobei das Schutzvolumen (25) variabel, nämlich von der aktuellen Position des Gefährdungsabschnitts (15) abhängig, ist, um eine planmäßige Annäherung des Gefährdungsabschnitts (15) an ein oder mehrere Objekte (19; 21) zuzulassen,
**dadurch gekennzeichnet,**
**dass** das Schutzvolumen (25) dadurch eingelernt wird:
- **dass** zunächst ein initiales Schutzvolumen (25) vorgegeben wird;
- **dass** die Maschine (11) dazu angesteuert wird, dass sich der bewegliche Maschinenteil (13) gemäß dem vorgegebenen Ablaufprogramm bewegt, während die Umgebung des Gefährdungsabschnitts (15) überwacht wird;
- **dass**, wenn die Bewegung des beweglichen Maschinenteils (13) infolge eines Eingreifens eines Objekts (19, 21) in das initiale Schutzvolumen (25) gestoppt wird, mittels einer ersten Nutzereingabe ein Einlernmodus (39) gestartet werden kann,
- **dass** in dem Einlernmodus die Bewegung bahntreu fortgesetzt wird, so dass sich der Gefährdungsabschnitt (15) entlang derselben dem Ablaufprogramm entsprechenden Bewegungsbahn bewegt, entlang der er sich auch ohne das Eingreifen eines Objekts (19, 21) in das Schutzvolumen (25) und das Starten des Einlernmodus (39) bewegen würde, und dabei Positionsdaten von Objekten (19, 21) in der Umgebung des Gefährdungsabschnitts (15) erfasst werden;
- **dass** mittels einer zweiten Nutzereingabe der Einlernmodus (39) beendet werden kann; und
- **dass** das Schutzvolumen (25) basierend auf den erfassten Positionsdaten definiert wird.

2. Verfahren nach Anspruch 1,
wobei die sicherheitsgerichtete Reaktion umfasst, dass die Bewegung des beweglichen Maschinenteils (13) verlangsamt wird, wenn das Eingreifen eine definierte weitere Eingriffsschwelle des Schutzvolumens (25) überschreitet, wobei die Eingriffsschwellen vorzugsweise so definiert sind, dass die weitere Eingriffsschwelle vor der genannten Eingriffsschwelle überschritten wird.

3. Verfahren nach Anspruch 1 oder 2,
wobei im Einlernmodus (39) die Bewegung des beweglichen Maschinenteils (13) in risikoreduzierter Weise, insbesondere mit im Vergleich zu einer dem vorgegebenen Ablaufprogramm gemäßen Geschwindigkeit reduzierter Geschwindigkeit, fortgesetzt wird.

4. Verfahren nach einem der vorstehenden Ansprüche,
wobei für diejenigen Abschnitte der Bewegung des beweglichen Maschinenteils (13), in denen die Objekte (19, 21), deren Positionsdaten erfasst worden sind, in das initiale Schutzvolumen (25) eingreifen, das Schutzvolumen (25) definiert wird, indem das initiale Schutzvolumen (25) verkleinert wird, bis diese Objekte (19, 21) nicht länger darein eingreifen, und wobei für die übrigen Abschnitte der Bewegung das Schutzvolumen (25) vorzugsweise mit dem initialen Schutzvolumen (25) gleichgesetzt wird.

5. Verfahren nach einem der vorstehenden Ansprüche,
wobei im Einlernmodus (39) die Bewegung des beweglichen Maschinenteils (13) gestoppt wird, sobald kein Objekt (19, 21) mehr in das initiale Schutzvolumen (25) eingreift, und der Einlernmodus (39) dann mittels der zweiten Nutzereingabe beendet werden kann.

6. Verfahren nach einem der vorstehenden Ansprüche,
wobei nach dem Beenden des Einlernmodus (39) die Bewegung des beweglichen Maschinenteils (13) gemäß dem Ablaufprogramm fortgesetzt wird.

7. Verfahren nach einem der vorstehenden Ansprüche,
wobei, falls nach dem Stoppen der Bewegung des beweglichen Maschinenteils (13) infolge eines Eingreifens eines Objekts (19, 21) in das Schutzvolumen (25) die erste Nutzereingabe ausbleibt, die Bewegung des beweglichen Maschinenteils (13) nicht fortgesetzt wird, solange das Objekt in das Schutzvolumen (25) eingreift.

8. Verfahren nach einem der vorstehenden Ansprüche,
wobei, wenn die Bewegung des beweglichen Maschinenteils (13) infolge eines Eingreifens eines Objekts (19. 21) in das initiale Schutzvolumen (25) gestoppt wird, ein Nutzer der Maschine (11) dazu aufgefordert wird, wahlweise die erste Nutzereingabe oder eine dritte Nutzereingabe einzugeben, mittels welcher eine Fortsetzung der Bewegung des beweglichen Maschinenteils (13) gemäß dem Ablaufprogramm freigegeben wird.

9. Verfahren nach einem der vorstehenden Ansprüche,
wobei die Umgebung des Gefährdungsabschnitts (15) mittels eines oder mehrerer Sensoren (23), insbesondere eines oder mehrerer berührungsloser Distanzsensoren, überwacht wird, die mit dem beweglichen Maschinenteil (13) mitbewegt werden.

10. Verfahren nach Anspruch 9,
wobei die Positionsdaten mittels des einen oder zumindest eines der mehreren Sensoren (23) erfasst werden.

11. Verfahren nach einem der vorstehenden Ansprüche,
wobei das Ablaufprogramm vom Schutzvolumen (25) unabhängig ist, insbesondere durch das Einlernen des Schutzvolumens (25) nicht modifiziert wird.

12. Verfahren nach einem der vorstehenden Ansprüche,
wobei das Schutzvolumen (25) für eine planmäßige Annäherung an veränderte Objekte (19, 21) anpassbar ist, indem das Einlernen wiederholt wird, wobei bei dem wiederholten Einlernen als das initiale Schutzvolumen (25) das zuletzt eingelernte Schutzvolumen (25) vorgegeben wird.

13. Maschine (11), die einen beweglichen Maschinenteil (13) mit einem Gefährdungsabschnitt (15) aufweist sowie eine Steuervorrichtung (17) umfasst, die zu einem sicheren Betrieb der Maschine (11) gemäß einem der vorstehenden Ansprüche ausgebildet ist.

14. Maschine nach Anspruch 13, die ferner einen oder mehrere Sensoren (23), insbesondere einen oder mehrere berührungslose Distanzsensoren, aufweist, die mit dem beweglichen Maschinenteil (13) mitbewegt werden, wobei die Steuervorrichtung (17) dazu ausgebildet ist, den einen oder die mehreren Sensoren (23) dazu anzusteuern, die Umgebung des Gefährdungsabschnitts (15) zu überwachen.

15. Maschine nach Anspruch 14,
wobei die Steuervorrichtung (17) dazu ausgebildet ist, den einen oder zumindest einen der mehreren Sensoren (23) dazu anzusteuern, im Einlernmodus (39) Positionsdaten von Objekten in der Umgebung des Gefährdungsabschnitts zu erfassen.

## Claims

1. A method (27) for the safe operation of a machine (11) which has a movable machine part (13) comprising a hazardous section (15), in particular as part of a human-robot collaboration,
wherein the method (27) comprises:
- the movable machine part (13) moving according to a sequence program predefined for the machine (11); and
- an environment of the hazardous section (15) being monitored, wherein, in the event of an engagement of an object (19, 21) into a defined protective volume (25) within the monitored environment, a safety-related reaction is triggered that comprises the movement of the movable machine part (13) being stopped if the engagement exceeds a defined engagement threshold of the protective volume (25);
wherein the protective volume (25) is variable, namely depending on the current position of the hazardous section (15), to permit a scheduled approach of the hazardous section (15) to one or more objects (19; 21), **characterized in that**
the protective volume (25) is taught:
- **in that** an initial protective volume (25) is first predefined;
- **in that** the machine (11) is controlled so that the movable machine part (13) moves according to the predefined sequence program while the environment of the hazardous section (15) is monitored;
- **in that**, if the movement of the movable machine part (13) is stopped as a result of an object (19, 21) engaging into the initial protective volume (25), a teach-in mode (39) can be started by means of a first user input,
- **in that**, in the teach-in mode, the movement is continued in line with the path so that the hazardous section (15) is moved along the same movement path which corresponds to the sequence program and along which said hazardous section (15) would also move without an object (19, 21) engaging into the protective volume (25) and the teach-in mode (39) being started, and position data of objects (19, 21) in the environment of the hazardous section (15) are acquired in so doing;
- **in that** the teach-in mode (39) can be terminated by means of a second user input; and
- **in that** the protective volume (25) is defined based on the acquired position data.

2. A method according to claim 1,
wherein the safety-related reaction comprises the movement of the movable machine part (13) being slowed down if the engagement exceeds a defined further engagement threshold of the protective volume (25), wherein the engagement thresholds are preferably defined such that the further engagement threshold is exceeded before said engagement threshold.

3. A method according to claim 1 or 2,
wherein, in the teach-in mode (39), the movement of the movable machine part (13) is continued in a risk-reduced manner, in particular at a reduced speed compared to a speed corresponding to the predefined sequence program.

4. A method according to any one of the preceding claims,
wherein, for those portions of the movement of the movable machine part (13) in which the objects (19, 21), whose position data were acquired, engage into the initial protective volume (25), the protective volume (25) is defined by reducing the initial protective volume (25) until these objects (19, 21) no longer engage into it, and
wherein the protective volume (25) is preferably equated with the initial protective volume (25) for the remaining portions of the movement.

5. A method according to any one of the preceding claims,
wherein, in the teach-in mode (39), the movement of the movable machine part (13) is stopped as soon as no object (19, 21) engages into the initial protective volume (25) anymore and the teach-in mode (39) can then be terminated by means of the second user input.

6. A method according to any one of the preceding claims,
wherein the movement of the movable machine part (13) is continued in accordance with the sequence program after the termination of the teach-in mode (39).

7. A method according to any one of the preceding claims,
wherein, if the first user input is absent after the movement of the movable machine part (13) has been stopped as a result of an object (19, 21) engaging into the protective volume (25), the movement of the movable machine part (13) is not continued as long as the object engages into the protective volume (25).

8. A method according to any one of the preceding claims,
wherein, if the movement of the movable machine part (13) is stopped as a result of an object (19, 21) engaging into the initial protective volume (25), a user of the machine (11) is prompted to selectively enter the first user input or a third user input by means of which a continuation of the movement of the movable machine part (13) is enabled in accordance with the sequence program.

9. A method according to any one of the preceding claims,
wherein the environment of the hazardous section (15) is monitored by means of one or more sensors (23), in particular one or more non-contact distance sensors, which are moved along with the movable machine part (13).

10. A method according to claim 9,
wherein the position data are acquired by means of the one or at least one of the plurality of sensors (23).

11. A method according to any one of the preceding claims,
wherein the sequence program is independent of the protective volume (25), in particular is not modified by the teaching-in of the protective volume (25).

12. A method according to any one of the preceding claims,
wherein the protective volume (25) can be adapted for a scheduled approach to changed objects (19, 21) by repeating the teaching-in, wherein the last taught protective volume (25) is predefined as the initial protective volume (25) during the repeated teaching-in.

13. A machine (11) which has a movable machine part (13) comprising a hazardous section (15) and comprises a control apparatus (17) which is configured for a safe operation of the machine (11) according to any one of the preceding claims.

14. A machine according to claim 13 which further has one or more sensors (23), in particular one or more non-contact distance sensors, which are moved along with the movable machine part (13),
wherein the control apparatus (17) is configured to control the one or more sensors (23) to monitor the environment of the hazardous section (15).

15. A machine according to claim 14,
wherein the control apparatus (17) is configured to control the one or at least one of the plurality of sensors (23) to acquire position data of objects in the environment of the hazardous section in the teach-in mode (39).

## Revendications

1. Procédé (27) de fonctionnement sécurisé d'une machine (11) comprenant une partie de machine mobile (13) avec une portion de danger (15), en particulier dans le cadre d'une collaboration homme-robot,
le procédé (27) consistant à :
- déplacer la partie de machine mobile (13) selon un programme de déroulement prédéfini pour la machine (11) ; et
- surveiller un environnement de la portion de danger (15),
sachant que, en cas d'intervention d'un objet (19, 21) dans un volume de protection défini (25) à l'intérieur de l'environnement surveillé, une réaction orientée vers la sécurité est déclenchée, laquelle comprend l'arrêt du mouvement de la partie de machine mobile (13) si l'intervention dépasse un seuil d'intervention défini du volume de protection (25) ;
le volume de protection (25) étant variable, à savoir dépendant de la position actuelle de la portion de danger (15), afin d'autoriser un rapprochement planifié de la portion de danger (15) vers un ou plusieurs objets (19 ; 21), **caractérisé en ce que**
le volume de protection (25) est appris par le fait que :
- un volume de protection initial (25) est tout d'abord prédéfini ;
- la machine (11) est commandée de telle sorte que la partie de machine mobile (13) se déplace selon le programme de déroulement prédéfini pendant que l'environnement de la portion de danger (15) est surveillé ;
- lorsque le mouvement de la partie de machine mobile (13) est arrêté suite à l'intervention d'un objet (19, 21) dans le volume de protection initial (25), un mode d'apprentissage (39) peut être démarré au moyen d'une première entrée utilisateur,
- en mode d'apprentissage, le mouvement est poursuivi en suivant la trajectoire, de sorte que la portion de danger (15) se déplace le long de la même trajectoire de déplacement correspondant au programme de déroulement, le long de laquelle elle se déplacerait également sans l'intervention d'un objet (19, 21) dans le volume de protection (25) et sans le démarrage du mode d'apprentissage (39), et des données de position d'objets (19, 21) dans l'environnement de la portion de danger (15) sont alors saisies ;
- le mode d'apprentissage (39) peut être quitté au moyen d'une deuxième entrée utilisateur ; et
- le volume de protection (25) est défini sur la base des données de position saisies.

2. Procédé selon la revendication 1,
dans lequel la réaction orientée vers la sécurité comprend le ralentissement du mouvement de la partie de machine mobile (13) si l'intervention dépasse un autre seuil d'intervention défini du volume de protection (25), les seuils d'intervention étant de préférence définis de telle sorte que l'autre seuil d'intervention est dépassé avant ledit seuil d'intervention.

3. Procédé selon la revendication 1 ou 2,
dans lequel, en mode d'apprentissage (39), le mouvement de la partie de machine mobile (13) est poursuivi de manière à réduire les risques, en particulier à une vitesse réduite par comparaison à une vitesse correspondant au programme de déroulement prédéfini.

4. Procédé selon l'une des revendications précédentes,
dans lequel, pour les parties du mouvement de la partie de machine mobile (13) dans lesquelles les objets (19, 21), dont les données de position ont été saisies, interviennent dans le volume de protection initial (25), le volume de protection (25) est défini en réduisant le volume de protection initial (25) jusqu'à ce que ces objets (19, 21) n'y interviennent plus, et
pour les autres parties du mouvement, le volume de protection (25) est de préférence égal au volume de protection initial (25).

5. Procédé selon l'une des revendications précédentes,
dans lequel, en mode d'apprentissage (39), le mouvement de la partie de machine mobile (13) est arrêté dès qu'aucun objet (19, 21) n'intervient plus dans le volume de protection initial (25), et le mode d'apprentissage (39) peut alors être quitté au moyen de la deuxième entrée utilisateur.

6. Procédé selon l'une des revendications précédentes,
dans lequel, une fois que le mode d'apprentissage (39) est quitté, le mouvement de la partie de machine mobile (13) est poursuivi conformément au programme de déroulement.

7. Procédé selon l'une des revendications précédentes,
dans lequel, si après l'arrêt du mouvement de la partie de machine mobile (13) suite à l'intervention d'un objet (19, 21) dans le volume de protection (25), la première entrée utilisateur n'est pas effectuée, le mouvement de la partie de machine mobile (13) n'est pas poursuivi tant que l'objet intervient dans le volume de protection (25).

8. Procédé selon l'une des revendications précédentes,
dans lequel, lorsque le mouvement de la partie de machine mobile (13) est arrêté suite à l'intervention d'un objet (19, 21) dans le volume de protection initial (25), un utilisateur de la machine (11) est invité à entrer, au choix, la première entrée utilisateur ou une troisième entrée utilisateur au moyen de laquelle la poursuite du mouvement de la partie de machine mobile (13) conformément au programme de déroulement est autorisée.

9. Procédé selon l'une des revendications précédentes,
dans lequel l'environnement de la portion de danger (15) est surveillé au moyen d'un ou plusieurs capteurs (23), en particulier au moyen d'un ou plusieurs capteurs de distance sans contact, qui sont déplacés avec la partie de machine mobile (13).

10. Procédé selon la revendication 9,
dans lequel les données de position sont saisies au moyen dudit ou de l'un au moins desdits plusieurs capteurs (23).

11. Procédé selon l'une des revendications précédentes,
dans lequel le programme de déroulement est indépendant du volume de protection (25), en particulier n'est pas modifié par l'apprentissage du volume de protection (25).

12. Procédé selon l'une des revendications précédentes,
dans lequel le volume de protection (25) peut être adapté pour un rapprochement planifié vers des objets modifiés (19, 21) en répétant l'apprentissage, le dernier volume de protection (25) appris étant prédéfini comme volume de protection initial lors de l'apprentissage répété.

13. Machine (11) comprenant une partie de machine mobile (13) avec une portion de danger (15) et comprenant un dispositif de commande (17) qui est conçu pour un fonctionnement sécurisé de la machine (11) selon l'une des revendications précédentes.

14. Machine selon la revendication 13, comprenant en outre un ou plusieurs capteurs (23), en particulier un ou plusieurs capteurs de distance sans contact, qui sont déplacés avec la partie de machine mobile (13), le dispositif de commande (17) étant conçu pour commander ledit ou lesdits plusieurs capteurs (23) pour surveiller l'environnement de la portion de danger (15).

15. Machine selon la revendication 14,
dans laquelle le dispositif de commande (17) est conçu pour commander ledit ou l'un au moins desdits plusieurs capteurs (23) pour saisir, en mode d'apprentissage (39), des données de position d'objets dans l'environnement de la portion de danger.
